# EUROPEAN PATENT APPLICATION

(11) **EP 4 765 919 A1**
(43) Date of publication of application: **24.06.2026**
(21) Application number: 24854121.1
(22) Date of filing: 30.07.2024
(51) Int. Cl.: H04W 16/26, H01Q 15/14, H04W 16/28, H04W 92/10

(54) **COMMUNICATION DEVICE, CONTROL DEVICE, COMMUNICATION METHOD, AND CONTROL METHOD**

(30) Priority: 15.08.2023 JP 2023132234
(71) Applicant: Sony Group Corporation, Tokyo 108-0075 (JP)
(72) Inventor: SUGAI, Ren, Tokyo 108-0075 (JP)
(74) Representative: Witte, Weller & Partner Patentanwälte mbB
(86) International application number: PCT/JP2024/027053
(87) International publication number: WO 2025/037530

(57) **Abstract**

A communication device enabling direct or indirect transmission of information, to a transmission path control device including a structure reflecting or transmitting an incoming radio wave and enabling control relating to a reflection characteristic or a transmission characteristic of the structure includes an acquisition unit that acquires combined wave information about combined waves formed by radio waves from a plurality of devices including a radio wave from the transmission path control device; and a transmission unit that transmits the combined wave information to the transmission path control device or a control device for the transmission path control device.

## Description

### Field

The present disclosure relates to a communication device, a control device, a communication method, and a control method.

### Background

With an expansion of communication demand, a problem that radio wave resources (radio resources) are depleted has emerged. In order to cope with this problem, attention has been paid to a technique for improving frequency utilization efficiency by dynamically changing a radio propagation path. For a device for changing the propagation path (hereinafter, also referred to as transmission path control device), a reconfigurable intelligent surface (RIS) is known. Installation of the RIS enables, for example, control of a reflection direction of a radio wave and formation of a new propagation path.

### Citation List

### Patent Literature

Patent Literature 1: JP 2022-117980 A

### Summary

### Technical Problem

However, there is a possibility that effective use of the radio wave resources is insufficiently implemented only by simple introduction of the RIS. For example, when a plurality of RISs is installed in a communication environment, there may be a possibility that reflected waves from the plurality of RISs cause unexpected interference and the frequency utilization efficiency originally assumed may not be achieved.

Therefore, the present disclosure proposes a communication device, a control device, a communication method, and a control method that enable implementation of effective use of radio wave resources.

Note that the above problem or object is merely one of a plurality of problems or objects that can be solved or achieved by a plurality of embodiments disclosed herein.

### Solution to Problem

In order to solve the above problem, a communication device according to one embodiment of the present disclosure enabling direct or indirect transmission of information, to a transmission path control device including a structure reflecting or transmitting an incoming radio wave and enabling control relating to a reflection characteristic or a transmission characteristic of the structure, the communication device comprising: an acquisition unit that acquires combined wave information about combined waves formed by radio waves from a plurality of devices including a radio wave from the transmission path control device; and a transmission unit that transmits the combined wave information to the transmission path control device or a control device for the transmission path control device.

### Brief Description of Drawings

FIG. 1 is a diagram for illustrating a structure of RIS.
FIG. 2 is a diagram illustrating a state in which RISs are installed in a communication environment.
FIG. 3 is a diagram illustrating combined waves formed by reflected waves from a plurality of RISs.
FIG. 4 is a diagram illustrating combined waves formed by reflected waves from RIS#1 and RIS#2.
FIG. 5 is a diagram illustrating a configuration of a communication system according to the present embodiment.
FIG. 6 is a diagram illustrating a configuration of a management device according to the present embodiment.
FIG. 7 is a diagram illustrating a configuration of a base station according to the present embodiment.
FIG. 8 is a diagram illustrating an exemplary configuration of a transmission path control device according to an embodiment of the present disclosure.
FIG. 9 is a diagram illustrating a configuration of a terminal device according to the present embodiment.
FIG. 10 is a diagram illustrating an exemplary configuration of a control station according to an embodiment of the present disclosure.
FIG. 11 is a sequence diagram illustrating a transmission path control process according to Example 1-1.
FIG. 12 is a sequence diagram illustrating a transmission path control process according to Example 1-2.
FIG. 13 is a sequence diagram illustrating a transmission path control process according to Example 1-3.
FIG. 14 is a sequence diagram illustrating a transmission path control process according to Example 1-4.
FIG. 15 is a sequence diagram illustrating a transmission path control process according to Example 1-5.
FIG. 16 is a sequence diagram illustrating a transmission path control process according to Example 2-1.
FIG. 17 is a sequence diagram illustrating a transmission path control process according to Example 2-2.
FIG. 18 is a sequence diagram illustrating a transmission path control process according to Example 2-3.

### Description of Embodiments

Embodiments of the present disclosure will be described in detail below with reference to the drawings. Note that in the following embodiments, the same portions are denoted by the same reference numerals or symbols, and the description thereof will not be repeated.

Furthermore, in the present description and the drawings, a plurality of component elements having substantially the same functional configurations will be distinguished by giving the same reference numerals or symbols followed by different numerals in some cases. For example, a plurality of configurations having substantially the same functional configurations is distinguished, as necessary, as transmission path control devices 30₁, 30₂, and 30₃. However, when there is no need to particularly distinguish the plurality of component elements having substantially the same functional configurations from each other, the component elements are denoted by only the same reference numerals or symbols. For example, when there is no need to particularly distinguish the transmission path control devices 30₁, 30₂, and 30₃, the transmission path control devices are simply referred to as transmission path control devices 30.

One or a plurality of embodiments (including examples and modifications) described below can be implemented independently. Meanwhile, at least some of the plurality of embodiments described below may be implemented in combination with at least some of the other embodiments as appropriate. The plurality of embodiments can include novel features different from each other. Therefore, the plurality of embodiments can contribute to solving different objects or problems, and can have different effects.

Furthermore, the present disclosure will be described in the order of items shown below.
1. Overview
   1-1. Problem
   1-2. Combined wave
   1-3. Overview of solution
2. Configuration of communication system
   2-1. Configuration of management device
   2-2. Configuration of base station
   2-3. Configuration of transmission path control device
   2-4. Configuration of terminal device
   2-5. Configuration of control station
3. Operations of communication system
   3-1. Overview of transmission path control process
   3-2. Combined wave information
4. Examples
   4-1. Example 1
   4-2. Example 2
   4-3. Example 3
   4-4. Example 4
5. Modifications
6. Conclusion

### <<1. Overview>>

With an expansion of communication demand, a problem that radio wave resources (radio resources) are depleted has emerged. In order to cope with this problem, attention has been paid to a technique for improving frequency utilization efficiency by dynamically changing a radio propagation path. For a device for changing the propagation path (hereinafter, also referred to as transmission path control device), a reconfigurable intelligent surface (RIS) is known. The RIS is also called an intelligent reflecting surface (IRS) or an intelligent surface (IS).

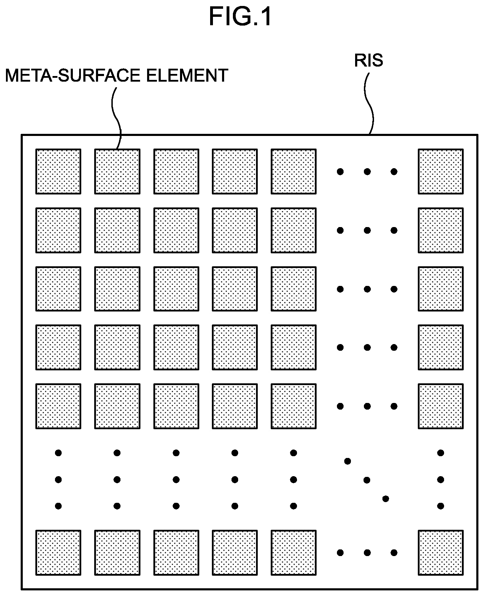

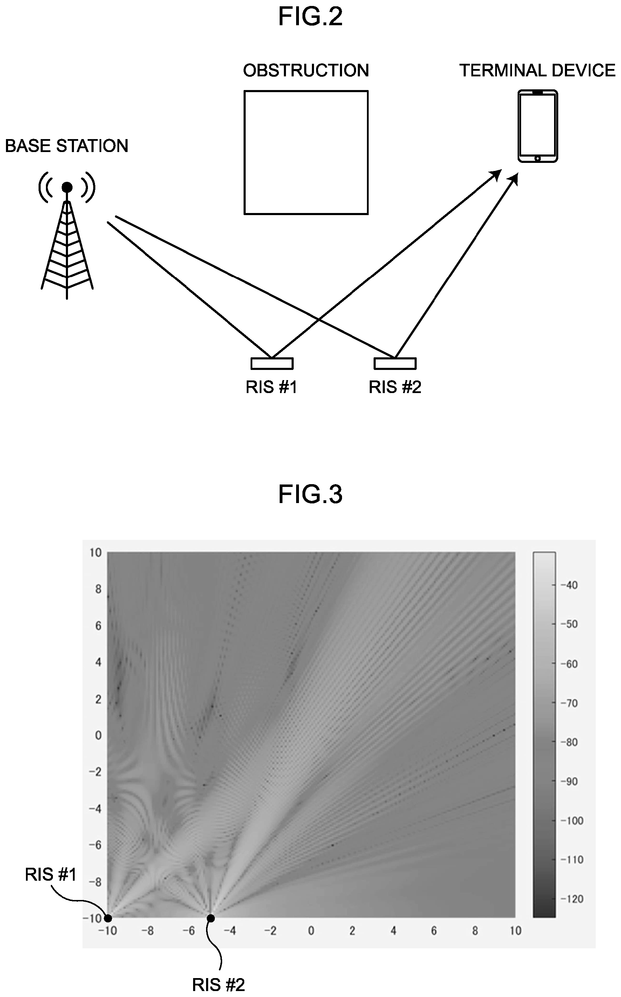

FIG. 1 is a diagram for illustrating a structure of the RIS. The RIS is, for example, a device that includes a structure (e.g., a reflector) including one or a plurality of meta-surface elements enables dynamic control of a dielectric constant and/or a magnetic permeability. Each of the meta-surface elements is, for example, a type of artificial medium (metamaterial) that includes subwavelength structures smaller than a wavelength, arranged periodically to achieve an appropriate dielectric constant and/or magnetic permeability. The meta-surface element may also be simply referred to as meta-surface. The RIS can operate the dielectric constant and/or magnetic permeability of the meta-surface (meta-surface element) to control an amplitude, phase, polarization, or frequency of an incoming radio wave. FIG. 2 is a diagram illustrating a state in which the RISs are installed in a communication environment. Controlling a reflected wave from the RIS by a control device inside or outside the RIS enables control of the direction of the reflected wave so as to bypass an obstruction or formation of a new propagation path.

Note that RISs include RIS (in the present embodiment, referred to as cooperative RIS) that operates in cooperation with a transmission/reception device including a base station, and RIS (in the present embodiment, referred to as blind RIS) that operates without cooperation with the transmission/reception device. The blind RIS does not require construction of infrastructure for cooperation with the transmission/reception device. Therefore, the blind RIS has an advantage of high degree of freedom in installation. On the other hand, the blind RIS cannot cooperate with the transmission/reception device. Therefore, as compared with the cooperative RIS, the blind RIS has a problem that the capability of improving a propagation environment depends on a collection capability of the RIS.

### <1-1. Problem>

The introduction of the RIS is expected to improve the frequency utilization efficiency. However, there is a possibility that effective use of the radio wave resources is insufficiently implemented only by simple introduction of the RIS. For example, as illustrated in FIG. 2, it is assumed that a plurality of RISs are installed in the communication environment. In the example of FIG. 2, two RISs, RIS#1 and RIS#2, are installed in the communication environment in which a base station and a terminal device communicate with each other. Here, it is assumed that all of the plurality of RISs are blind RISs. In this configuration, each of the plurality of RISs cannot grasp what kind of control is being performed by the other RISs. As a result, there is a possibility that the reflected waves from the plurality of RISs may cause unexpected interference and frequency utilization efficiency originally assumed may not be achieved.

### <1-2. Combined wave>

Before description of an overview of solution to the above problem, combined waves formed by reflected waves from the plurality of RISs will be described. FIG. 3 is a diagram illustrating combined waves formed by the reflected waves from the plurality of RISs. Specifically, FIG. 3 is a diagram illustrating the combined waves formed by the reflected waves from the RIS#1 and RIS#2.

As described above, when the plurality of RISs (e.g., a plurality of the blind RISs) is installed in the communication environment, there is a plurality of reflection sources of the reflected waves. In principle, the plurality of RISs cannot grasp what kind of control is performed by the other RISs. Reception power of a reception device (the terminal device in the example of FIG. 2) changes in intensity, depending on whether the plurality of reflected waves from the plurality of RISs overlap in phase or in opposite phase. When the reception device is located at a position where the plurality of reflected waves overlap in phase, the reception power of the reception device increases, but when the reception device is located at a position where the plurality of reflected waves overlap in opposite phase, the reception power of the reception device decreases.

The position where the reflected waves overlap in phase and the position where the reflected waves overlap in opposite phase change, depending on the direction of the reflected wave formed by each RIS and the position of the reception device. The position where the reception power is received in phase and the position where the reception power is received in opposite phase alternately emerge as illustrated in FIG. 3. In the present embodiment, the combined waves may be referred to as interference fringes.

### <1-3. Overview of solution>

On the premise of the above description, an overview of the solution of the present embodiment will be described.

A communication system of the present embodiment includes one or a plurality of communication devices (e.g., base station and/or terminal device) and a plurality of RISs. Here, each of the RISs may be RIS (in the present embodiment, referred to as active RIS) having a function of amplifying and reflecting an incoming radio wave, or may be RIS (in the present embodiment, referred to as passive RIS) that reflects an incoming radio wave without amplifying. In the following description, the RISs included in the communication system are, for example, a passive RIS. As a matter of course, the RISs included in the communication system are not limited to the passive RIS, and may be another type of RIS.

The communication system of the present embodiment selects a plurality of RISs to be operated in cooperation, and controls an interval between interference fringes formed by reflected waves from the selected plurality of RISs and a position where the interference fringes are intensified. The interval between the interference fringes to be formed changes depending on the positions of the RISs and the directions of the reflected waves formed by the RISs.

The RIS may be controlled by each of the communication devices. For example, the communication device acquires combined wave information about the combined waves formed by radio waves from the plurality of RISs. The combined wave information may be, for example, a simulation result of the combined waves formed by reflected waves from the plurality of RISs. Then, the communication device transmits the combined wave information to the plurality of RISs to control the plurality of RISs so as to form desired interference fringes. The plurality of RISs may cooperatively control the reflected waves on the basis of the combined wave information. The information used by the plurality of RISs to control the reflected waves is not limited to the combined wave information received from the communication device. The plurality of RISs may cooperatively control the reflected waves according to an environment in which each of the RISs is arranged, a communication status of each of the communication devices, a lapse of time, signaling from the cooperative RIS, and the like.

Note that the communication device may control the plurality of RISs so as to make the interference fringes coarse. This configuration enables the communication device to increase or decrease the reception power at a specific position. For example, the communication device can increase the reception power at a position of the communication device to be a communication partner and decrease the reception power at a position of another communication device not to be a communication partner. In addition, the communication device may control the plurality of RISs so as to make the interference fringes fine. As a result, the communication device can prevent a decrease in reception power due to interference fringes, a decrease in accuracy of beam formation, a decrease in reception power due to a deviation in beam direction caused by channel fluctuation, and the like.

Although the overview of the present embodiment has been described above, a communication system 1 according to the present embodiment will be described in detail below.

### <<2. Configuration of communication system>>

First, a configuration of the communication system 1 will be described in detail. The configuration of the communication system 1 described below is common to Examples 1 to 4.

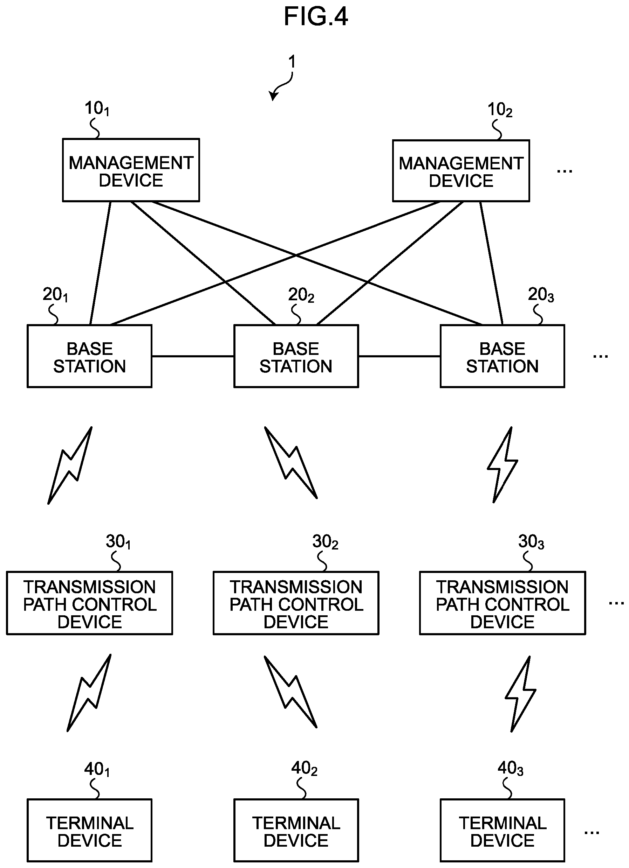

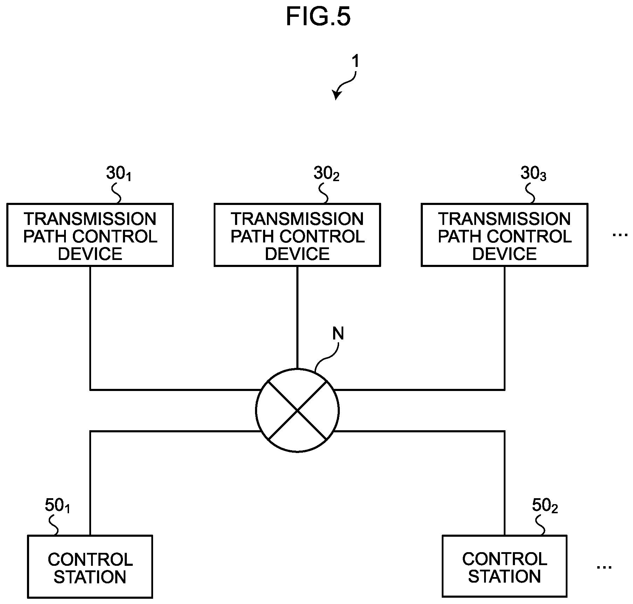

FIGS. 4 and 5 are diagrams each illustrating a configuration of the communication system 1 according to the present embodiment. As illustrated in FIG. 4, the communication system 1 includes a management device 10, a base station 20, a transmission path control device 30, and a terminal device 40. Note that the communication system 1 may include a device other than the device illustrated in FIG. 4. For example, as illustrated in FIG. 5, the communication system 1 may include a control station 50 that controls a plurality of the transmission path control device 30.

In the communication system 1, wireless communication devices constituting the communication system 1 operate in cooperation with each other to provide a wireless network (mobile network) through which mobile communication can be performed, to the user. The wireless network of the present embodiment may be, for example, a cellular network including a radio access network RAN and a core network CN. The mobile network may include the terminal device 40. In the present embodiment, the wireless communication devices are each a communication device having a wireless communication function, and in the example of FIG. 4, the base station 20 and the terminal device 40 correspond to the wireless communication devices.

The communication system 1 may include a plurality of the management devices 10, the base stations 20, the transmission path control devices 30, the terminal devices 40, and the control stations 50. In the example of FIG. 4, the communication system 1 includes a management device 10₁ and a management device 10₂ as the management device 10, and includes a base station 20₁, a base station 20₂, and a base station 20₃ as the base station 20. Furthermore, in the example of FIG. 4, the communication system 1 includes a transmission path control device 30₁, a transmission path control device 30₂, and a transmission path control device 30₃ as the transmission path control device 30, and includes a terminal device 40₁, a terminal device 40₂, and a terminal device 40₃, as the terminal device 40. In the example of FIG. 5, the communication system 1 includes a control station 50₁ and a control station 50₂ as the control station 50. The number of the control stations 50 that control the plurality of the transmission path control devices 30 may be one or three or more.

The terminal device 40 may be configured to use a radio access technology (RAT) such as long term evolution (LTE), new radio (NR), 6G, Wi-Fi, or Bluetooth (registered trademark), for connection to a network. At this time, the terminal device 40 may be configured to be able to use different radio access technologies (wireless communication systems). For example, the terminal device 40 may be configured to be able to use NR and Wi-Fi. Furthermore, the terminal device 40 may be configured to be able to use different cellular communication technologies (e.g., LTE, NR, or 6G). In the following description, the terminal device 40 may be referred to as user equipment (UE).

Each of LTE and NR is a type of cellular communication technology, and a plurality of areas each covered by a base station, arranged in the form of cells, enables mobile communication of a terminal device. Furthermore, 6G may also be a technology that enables mobile communication of a terminal device by arranging a plurality of areas each covered by a base station, in the form of cells, as a type of cellular communication technology.

Note that in the following description, "LTE" includes LTE-Advanced (LTE-A), LTE-Advanced Pro (LTE-A Pro), and Evolved Universal Terrestrial Radio Access (EUTRA). In addition, NR includes a new radio access technology (NRAT) and Further EUTRA (FEUTRA). Note that a single base station 20 may manage a plurality of cells. In the following description, a cell supporting LTE is referred to as an LTE cell, and a cell supporting NR is referred to as an NR cell.

The NR is a radio access technology for a next generation (fifth generation) of LTE (fourth generation communication including LTE-Advanced and LTE-Advanced Pro). The NR is a radio access technology that is configured to support various use cases including enhanced mobile broadband (eMBB), massive machine type communications (mMTC), and ultra-reliable and low latency communications (URLLC). The NR is specified and standardized in the 3GPP (registered trademark) Rel-15, as a technical framework corresponding to a usage scenario, a requirement condition, a deployment scenario, and the like in these use cases. Furthermore, in the Beyond 5G and 6G, it is required to simultaneously achieve a plurality of axes of the enhanced mobile broadband, ultra-reliable low-latency communication, and massive machine type communications.

The 6G is a cellular communication technology of a next generation of NR and 5GS (5G system) which is the fifth generation mobile communication. The 6G includes a radio access technology and a network technology between a base station, a core network, and a data network. In addition, the 6G includes technologies for extreme connectivity of the eMBB, mMTC, and URLLC which are main use cases or requirements in the NR. In addition, the 6G includes new technologies in new aspects. For example, 6G may include technologies related to AI (cognitive network and AI native Air Interface), sensing (including Rader sensing and network as a sensor), and terahertz communication.

Note that the wireless network may support at least one of radio access technology (RAT) such as Long Term Evolution (LTE), New Radio (NR), and 6G. Each of LTE, NR, and 6G is a type of cellular communication technology, and a plurality of areas each covered by a base station, arranged in the form of cells, enables mobile communication of a terminal device. Note that a radio access system used by the communication system 1 is not limited to LTE, NR, or 6G, and may use another radio access system such as wideband code division multiple access (WCDMA) or code division multiple access 2000 (cdma2000).

The base station 20 may be a ground station or a non-ground station. The non-ground station may be a satellite station or an aeronautical station. If the non-ground station is the satellite station, the wireless network may be a bent-pipe (transparent) satellite mobile communication system.

Note that in the present embodiment, the ground station and a terrestrial base station are each a base station and a repeater station that are installed on the ground. Here "ground" represents a position not only on the land but also under the ground, on the water, and under the water in a broad sense. Note that, in the following description, "ground station" may be replaced with "gateway".

Note that a base station for LTE may be referred to as evolved node B (eNodeB) or eNB. Furthermore, a base station for NR may be referred to as gNodeB or gNB. Furthermore, a base station for 6G may be referred to as 6G NodeB (6GNB). Still furthermore, in LTE, NR and 6G, a terminal device (also referred to as mobile station or terminal) may be referred to as User Equipment (UE). Note that the terminal device is a type of communication device and is also referred to as mobile station or terminal.

Note that the terminal device 40 may be connectable to a network by using a radio access technology ( wireless communication system) other than LTE, NR, 6G, Wi-Fi, and Bluetooth. For example, the terminal device 40 may be connectable to the network by using low power wide area (LPWA) communication. Furthermore, the terminal device 40 may be connectable to the network by using wireless communication according to a unique specification.

Here, the LPWA communication is wireless communication that enables low-power and wide-range communication. For example, the LPWA wireless communication is Internet of Things (IoT) wireless communication using a specified low-power radio wave (e.g., 920 MHz band) or an industry-science-medical (ISM) band. Note that the LPWA communication used by the terminal device 40 may conform to a LPWA standard. Examples of the LPWA standard include ELTRES, ZETA, SIGFOX, LoRaWAN, NB-Iot, and the like. As a matter of course, the LPWA standard is not limited thereto, and may be another LPWA standard.

Each of the wireless communication devices illustrated in FIGS. 4 and 5 may be considered as a device in a logical sense. In other words, parts of the wireless communication devices may be achieved by a virtual machine (VM), container such as Docker, or the like and implemented physically on the same hardware.

In the present embodiment, the concept of the wireless communication device includes not only a portable mobile device (terminal device) such as a mobile terminal but also a device installed on a structure or mobile object. The structure or the mobile object itself may be regarded as the wireless communication device. Furthermore, the concept of the wireless communication device includes not only the terminal device 40 but also the base station 20. The wireless communication device is a type of processing device or information processing device. Furthermore, the wireless communication device can also be referred to as transmission device or reception device.

Hereinafter, configurations of the wireless communication devices constituting the communication system 1 will be specifically described. Note that the configurations of the wireless communication devices described below are merely examples. The configurations of the wireless communication devices may be different from the following configurations.

### <2-1. Configuration of management device>

First, a configuration of the management device 10 will be described.

The management device 10 is an information processing device (computer) that manages the wireless network. For example, the management device 10 is an information processing device that manages communication of the base station 20. The management device 10 is also a type of communication device.

The management device 10 may be, for example, a device that has a function as a mobility management entity (MME). Furthermore, the management device 10 may be a device that has a function as an access and mobility management function (AMF) and/or a session management function (SMF). The MME, the AMF, and the SMF are control plane network function nodes in the core network. The management device 10 may be a device having a function as a control plane network function in 6G (6G CPNF). The 6G CPNF may include one or a plurality of logical nodes.

As a matter of course, the functions of the management device 10 are not limited to the MME, the AMF, the SMF, and the 6G CPNF. The management device 10 may be a device that has functions as a network slice selection function (NSSF), authentication server function (AUSF), policy control function (PCF), and unified data management (UDM). Furthermore, the management device 10 may be a device that has a function as a home subscriber server (HSS).

Note that the management device 10 may have a gateway function. For example, the management device 10 may have functions as a serving gateway (S-GW) or a packet data network gateway (P-GW). In addition, the management device 10 may have a function of a user plane function (UPF). At this time, the management device 10 may have a plurality of UPFs. Furthermore, the management device 10 may be a device that has a function as a user plane network function in 6G (6G UPNF).

The core network includes a plurality of network functions, and the network functions may be integrated into one physical device or distributed to a plurality of physical devices. In other words, the management device 10 may be dispersedly arranged to be distributed in a plurality of devices. Furthermore, this distributed arrangement may be controlled dynamically. The base station 20 and the management device 10 constitute one network and provide a wireless communication service to the terminal device 40. The management device 10 is connected to the Internet, and the terminal device 40 is configured to use various services provided via the Internet, via the base station 20.

Note that the management device 10 may not necessarily be a device constituting the core network. For example, it is assumed that the core network is a core network for Wideband Code Division Multiple Access (W-CDMA) or Code Division Multiple Access 2000 (cdma2000). At this time, the management device 10 may be a device that functions as a radio network controller (RNC).

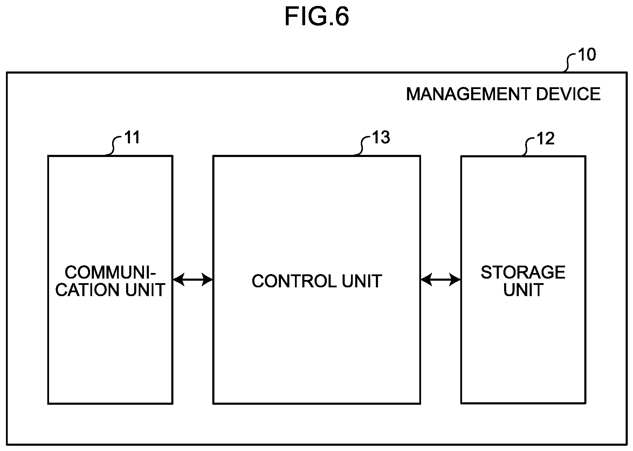

FIG. 6 is a diagram illustrating a configuration of the management device 10 according to the present embodiment. The management device 10 includes a communication unit 11, a storage unit 12, and a control unit 13. The configuration illustrated in FIG. 6 represents a functional configuration, and the management device 10 may have a hardware configuration different from this functional configuration. Furthermore, the functions of the management device 10 may be statically or dynamically distributed, for implementation, to a plurality of physically separated configurations. The management device 10 may be constituted by a plurality of server devices.

The communication unit 11 is a communication interface for communication with another communication device (e.g., base station 20). The communication unit 11 may be a network interface or a device connection interface. The communication unit 11 may be a local area network (LAN) interface such as a network interface card (NIC) or may be a universal serial bus (USB) interface including a USB host controller, a USB port, or the like. Furthermore, the communication unit 11 may be a wired interface or a wireless interface. The communication unit 11 functions as communication means for the management device 10. The communication unit 11 is controlled by the control unit 13.

The storage unit 12 is a readable/writable storage device such as dynamic random access memory (DRAM), static random access memory (SRAM), a flash memory, or a hard disk. The storage unit 12 functions as storage means for the management device 10. The storage unit 12 stores, for example, a connection state of the terminal device 40. The storage unit 12 stores a state of radio resource control (RRC) and a state of EPS connection management (ECM) or 5G system connection management (CM) of the terminal device 40. The storage unit 12 may function as a home memory that stores position information of the terminal device 40. In addition, the storage unit 12 stores a learning model (prediction model) for predicting a future quality of the mobile network. The learning model will be described later.

The control unit 13 is a controller that controls the units of the management device 10. The control unit 13 may be implemented by a processor such as a central processing unit (CPU) or a micro processing unit (MPU). Specifically, the control unit 13 may be implemented by executing various programs stored in the storage device in the management device 10 by the processor, with the random access memory (RAM) or the like as a working area. The control unit 13 may be implemented by an integrated circuit such as an application specific integrated circuit (ASIC) or a field programmable gate array (FPGA). Furthermore, the control unit 13 may be implemented by a graphics processing unit (GPU). Any of the CPU, MPU, ASIC, FPGA, and GPU can be regarded as the controller. Note that the control unit 13 may include a plurality of physically separated objects. For example, the control unit 13 may include a plurality of semiconductor chips.

Note that the operations of the control unit 13 may be similar to the operations of a control unit 23 of the base station 20, a control unit 43 of the terminal device 40, and a control unit 53 of the control station 50.

### <2-2. Configuration of base station>

Next, a configuration of the base station 20 will be described.

The base station 20 is a wireless communication device that performs wireless communication with another wireless communication device (e.g., terminal device 40 or another base station 20). The base station 20 may wirelessly communicate with the terminal device 40 via a repeater station, or may wirelessly communicate with the terminal device 40 directly.

More specifically, the base station 20 is a device corresponding to a wireless base station (Node B, eNB, gNB, or 6GNB) or a wireless access point. The base station 20 may be a wireless relay station. Furthermore, the base station 20 may be a small cell radio unit called remote radio head (RRH). Furthermore, the base station 20 may be a receiving station such as a field pickup unit (FPU). Furthermore, the base station 20 may be an integrated access and backhaul (IAB) donor node or IAB relay node that provides a radio access link and a radio backhaul link by using time division multiplexing, frequency division multiplexing, or space division multiplexing.

The radio access technology used by the base station 20 may be a cellular communication technology. The radio access technology used by the base station 20 may be a wireless LAN technology. The radio access technology used by the base station 20 may be a low power wide area (LPWA) communication technology. However, the radio access technology used by the base station 20 is not limited thereto, and may be another radio access technology. Wireless communication used by the base station 20 may be wireless communication using a millimeter wave or wireless communication using a terahertz wave. Furthermore, the wireless communication used by the base station 20 may be wireless communication using a radio wave, or wireless communication using infrared or visible light (optical wireless communication). Furthermore, the base station 20 may be able to perform non-orthogonal multiple access (NOMA) communication with the terminal device 40. Here, the NOMA communication is communication (transmission, reception, or both) using non-orthogonal resources. Note that the base station 20 may be able to perform NOMA communication with another base station 20.

Note that the base station 20 may be mutually communicable with the core network via a base station-core network interface (e.g., NG interface, S1 interface, and the like). This interface may be a wired interface or a wireless interface. Furthermore, the base stations may be communicable with each other via an inter-base station interface (e.g., Xn interface, X2 interface, F1 interface, etc). This interface may be a wired interface or a wireless interface.

The concept of the base station (also referred to as "base station device") includes not only a donor base station but also a relay base station (also referred to as repeater station). The relay base station may be any one of an RF repeater, a smart repeater, and an intelligent surface. Furthermore, the concept of the base station includes not only a structure having a function of the base station but also a device installed on the structure.

The structure includes buildings such as a high-rise building, house, steel tower, station facility, airport facility, harbor facility, office building, school building, hospital, factory, commercial facility, and stadium. The concept of the structure includes not only the buildings but also non-building structures such as a tunnel, bridge, dam, fence, and steel column, and facilities such as a crane, gate, and windmill. In addition, the concept of the structure includes not only a structure on land (on the ground in a narrow sense) or under the ground but also a structure on the water such as a pier or megafloat and a structure under the water such as an ocean observation facility. The base station can also be referred to as information processing device.

The base station 20 may be a donor station or a relay station (repeater station). Furthermore, the base station 20 may be a fixed station or a mobile station. The mobile station is a wireless communication device (e.g., base station) configured to be movable. At this time, the base station 20 may be a device installed on a mobile object or the mobile object itself. For example, a relay station having mobility can be regarded as the base station 20 as the mobile station. In addition, a device, such as a vehicle, unmanned aerial vehicle (UAV) represented by a drone, or smartphone, that originally has mobility and that has functions of the base station (at least some of the functions of the base station) corresponds to the base station 20 as the mobile station, as well.

Here, the mobile object may be a mobile terminal such as a smartphone or mobile phone. Furthermore, the mobile object may be a mobile object (e.g., a vehicle such as an automobile, bicycle, bus, truck, motorcycle, train, or linear motor car) that moves on land (on the ground in a narrow sense) or may be a mobile object (e.g., subway) that moves under the ground (e.g., in a tunnel). Furthermore, the mobile object may be a mobile object (e.g., a ship such as a passenger ship, cargo ship, or hovercraft) that moves on the water or may be a mobile object (e.g., a submersible ship such as a submersible vessel, submarine boat, or unmanned submersible) that moves under water. The mobile object may be a mobile object (e.g., aircraft such as airplane, airship, or drone) that moves in the atmosphere.

Furthermore, the base station 20 may be a terrestrial base station (ground station) that is installed on the ground. The base station 20 may be a base station that is arranged in a structure on the ground or a base station that is installed on a mobile object moving on the ground. The base station 20 may be an antenna that is installed on a structure such as a building and a signal processing device connected to the antenna. The base station 20 may be the structure itself or mobile object itself. "On the ground" represents not only on land (on the ground in a narrow sense) but also under the ground, on the water, and under the water, in a broad sense. The base station 20 is not limited to the terrestrial base station. When the communication system 1 is a satellite communication system, the base station 20 may be an aeronautical station. From the viewpoint of the satellite station, the aeronautical station positioned on the earth is a ground station.

The base station 20 is not limited to the ground station. The base station 20 may be a non-terrestrial base station (non-ground station) that is configured to float in the air or in space. The base station 20 may be an aeronautical station or a satellite station.

The satellite station is a satellite station that is configured to float above the atmosphere. The satellite station may be a device mounted in a space mobile object such as an artificial satellite or may be the space mobile object itself. The space mobile object is a mobile object that moves above the atmosphere. Examples of the space mobile object include artificial celestial bodies such as an artificial satellite, spacecraft, space station, and probe. Note that a satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. The satellite station may be a device mounted in the low earth orbiting satellite, medium earth orbiting satellite, geostationary earth orbiting satellite, or highly elliptical orbiting satellite.

The aeronautical station is a wireless communication device that is configured to float in the atmosphere, such as an aircraft. The aeronautical station may be a device mounted in an aircraft or the like or may be the aircraft itself. The concept of the aircraft includes not only a heavier-than-air aircraft such as an airplane or glider, but also a lighter-than-air aircraft such as a balloon or airship. Furthermore, the concept of the aircraft includes not only the heavier-than-air aircraft or lighter-than-air aircraft, but also a rotorcraft such as a helicopter or autogiro. The aeronautical station or an aircraft in which the aeronautical station is mounted may be an unmanned aircraft such as a drone.

The concept of the unmanned aircraft also includes an unmanned aircraft system (UAS) and a tethered UAS. Furthermore, the concept of the unmanned aircraft includes a lighter than air UAS (LTA) and a heavier than air UAS (HTA). In addition, the concept of the unmanned aircraft also includes high altitude UAS platforms (HAPs).

The coverage of the base station 20 may be relatively large such as a macro cell or may be relatively small such as a pico cell. The base station 20 may provide extremely small coverage, such as a femtocell. The base station 20 may have a beamforming function. A cell or service area may be formed for each beam, in the base station 20. Furthermore or alternatively, the base station 20 may have a function of precisely delivering a desired wave to a predetermined point by further considering distance information from an antenna of the base station 20, in addition to the beamforming that gives directivity to a beam. This function may be called beam focusing or point forming.

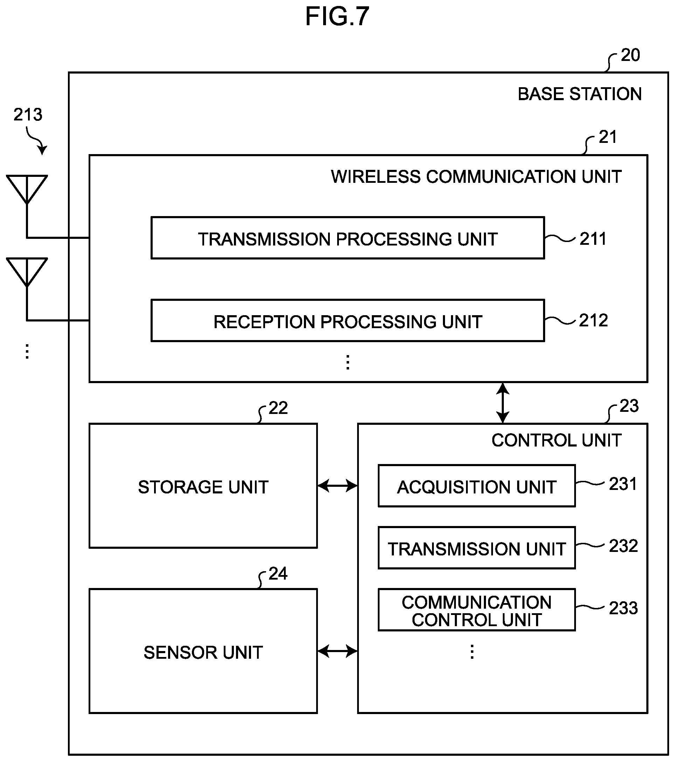

FIG. 7 is a diagram illustrating a configuration of the base station 20 according to the present embodiment. The base station 20 includes a wireless communication unit 21, a storage unit 22, the control unit 23, and a sensor unit 24. The base station 20 may not necessarily include all these components. For example, the base station 20 may not include the sensor unit 24. Note that the configuration illustrated in FIG. 7 represents a functional configuration, and the base station 20 may have a hardware configuration different from this functional configuration. Furthermore, the functions of the base station 20 may be implemented in a manner to be distributed to a plurality of physically separated configurations.

The wireless communication unit 21 is a signal processing unit for wireless communication with another wireless communication device (e.g., terminal device 40 or another base station 20). The wireless communication unit 21 is controlled by the control unit 23. The wireless communication unit 21 supports one or a plurality of radio access systems. The wireless communication unit 21 may support at least one of NR, LTE, and 6G. The wireless communication unit 21 may support W-CDMA, cdma2000, and the like in addition to NR, LTE, and 6G. The wireless communication unit 21 may support an automatic retransmission technology such as hybrid automatic repeat request (HARQ).

The wireless communication unit 21 includes a transmission processing unit 211, a reception processing unit 212, and an antenna 213. The wireless communication unit 21 may include a plurality of the transmission processing units 211, reception processing units 212, and antennas 213. When the wireless communication unit 21 supports the plurality of radio access systems, the units of the wireless communication unit 21 may be individually configured for each of the radio access systems. The transmission processing units 211 and the reception processing units 212 may be configured individually for each of LTE, NR, and 6G. The antenna 213 may include a plurality of antenna elements, for example, a plurality of patch antennas. The wireless communication unit 21 may have a beamforming function. For example, the wireless communication unit 21 may have a polarization beamforming function using vertical polarization (V polarization) and horizontal polarization (H polarization) (or polarization beamforming function using dual polarization with a polarization direction of 45 degrees and a polarization direction of -45 degrees from a vertical direction).

The transmission processing unit 211 performs transmission processing for downlink control information and downlink data. For example, the transmission processing unit 211 encodes the downlink control information and the downlink data that are input from the control unit 23, by using an encoding method such as block coding, convolutional coding, or turbo coding. Here, as the encoding, polar code encoding and low density parity check code (LDPC) encoding may be performed. The transmission processing unit 211 modulates encoded bits by a predetermined modulation method such as BPSK, QPSK, 16QAM, 64QAM, or 256QAM. In this case, signal points in a constellation do not necessarily need to be equidistant from each other. The constellation may be non uniform constellation (NUC). Then the transmission processing unit 211 multiplexes a modulation symbol and a downlink reference signal on each channel so as to be mapped to a predetermined resource element. Then the transmission processing unit 211 performs various signal processing on a signal obtained by multiplexing. For example, the transmission processing unit 211 performs processing, such as conversion to a frequency domain by using fast Fourier transform, addition of a guard interval (cyclic prefix), generation of a baseband digital signal, conversion to an analog signal, quadrature modulation, up-convert, removal of an unnecessary frequency component, and amplification of power. The signal generated by the transmission processing unit 211 is transmitted from the antenna 213.

The reception processing unit 212 processes an uplink signal received via the antenna 213. For example, the reception processing unit 212 performs, on the uplink signal, down-conversion, removal of an unnecessary frequency component, control of an amplification level, quadrature demodulation, conversion to a digital signal, removal of a guard interval (cyclic prefix), extraction of a frequency domain signal by using fast Fourier transform, and the like. Then the reception processing unit 212 demultiplexes an uplink channel, such as a physical uplink shared channel (PUSCH) or a physical uplink control channel (PUCCH), and an uplink reference signal, from the signal on which the processing has been performed. Furthermore, the reception processing unit 212 uses a modulation method such as binary phase shift keying (BPSK) or quadrature phase shift keying (QPSK) for a modulation symbol on the uplink channel to demodulate the received signal. The modulation method used for the demodulation may be 16 quadrature amplitude modulation (QAM), 64QAM, or 256QAM. In this case, signal points in a constellation do not necessarily need to be equidistant from each other. The constellation may be a non uniform constellation (NUC). Then the reception processing unit 212 performs decode processing on the demodulated encoded bits on the uplink channel. Uplink data and uplink control information that have been decoded are output to the control unit 23.

The antenna 213 is an antenna device that mutually converts a current and a radio wave. The antenna 213 may be constituted by one antenna element, for example, one patch antenna. Furthermore, the antenna 213 may include the plurality of antenna elements, for example, the plurality of patch antennas. When the antenna 213 includes the plurality of antenna elements, the wireless communication unit 21 may have a beamforming function. The wireless communication unit 21 may be configured to use the plurality of antenna elements to control the directivity of a radio signal and generate a directional beam. The antenna 213 may be a dual-polarized antenna. When the antenna 213 is a dual-polarized antenna, the wireless communication unit 21 may use vertical polarization (V polarization) and horizontal polarization (H polarization) (or dual polarization with a polarization direction of 45 degrees and a polarization direction of -45 degrees from a vertical direction), upon transmission of a wireless signal. The wireless communication unit 21 may control the directivity of the wireless signal transmitted using the vertical polarization and the horizontal polarization (or dual polarization with a polarization direction of 45 degrees and a polarization direction of -45 degrees from the vertical direction). Furthermore, the wireless communication unit 21 may transmit and receive spatially multiplexed signals via a plurality of layers of the plurality of antenna elements.

The storage unit 22 is a data readable/writable storage device such as DRAM, SRAM, a flash memory, or a hard disk. The storage unit 22 functions as storage means for the base station 20.

The control unit 23 is a controller that controls the units of the base station 20. The control unit 23 controls the wireless communication unit to perform wireless communication with another wireless communication device (e.g., terminal device 40 or another base station 20). The control unit 23 may be implemented by a processor such as CPU or MPU. Specifically, the control unit 23 may be implemented by executing various programs stored in the storage device in the base station 20 by the processor, with the RAM or the like as a working area. The control unit 23 may be implemented by an integrated circuit such as ASIC or FPGA. Furthermore, the control unit 23 may be implemented by a GPU. Any of the CPU, MPU, ASIC, FPGA, and GPU can be regarded as the controller. Note that the control unit 23 may include a plurality of physically separated objects. For example, the control unit 23 may include a plurality of semiconductor chips.

The control unit 23 includes an acquisition unit 231, a transmission unit 232, and a communication control unit 233. Blocks (the acquisition unit 231 to the communication control unit 233) constituting the control unit 23 are functional blocks indicating functions of the control unit 23. These functional blocks may be software blocks or hardware blocks. For example, each of the functional blocks described above may be one software module implemented by software (including microprogram) or one circuit block on a semiconductor chip (die). As a matter of course, each functional block may be one processor or one integrated circuit. The control unit 23 may include functional units different from the above functional blocks. Any configuration method is employed for the functional blocks.

Note that the operation of each block constituting the control unit 23 may be similar to the operation of each block included in the control unit 43 of the terminal device 40 and the operation of each block included in the control unit 53 of the control station 50. Furthermore, the operations of the control unit 23 may be similar to the operations of the control unit 13 of the management device 10.

The sensor unit 24 is a sensor that acquires various information about wireless communication. For example, the sensor unit 24 is a sensor that acquires information about an object around the device. For example, the sensor unit 24 is a sensor that acquires information such as a position, a shape, and a motion of another object (e.g., a third object, a communication device constituting a communication link, or a third communication device). The sensor unit 24 may be a sensor for detecting a state of the device itself (e.g., a position, moving speed, inclination, vibration, rotation, and the like of the base station 20).

The sensor unit 24 is a sensor that acquires various information about wireless communication. For example, the sensor unit 24 is a sensor that acquires information about an object around the device. For example, the sensor unit 24 is a sensor that acquires information about a position, a shape, and a motion of the another object. The sensor unit 24 may be a sensor for detecting a state of the device itself (e.g., a position, moving speed, inclination, vibration, rotation, and the like of the base station 20).

The sensor unit 24 may be a radio frequency sensor (RF sensor) or a non-RF sensor. Furthermore, the sensor unit 24 may be a sensor system (e.g., sensor unit or sensor module) in which the RF sensor and the non-RF sensor are combined.

Here, the RF sensor represents a component that performs measurement by using a radio wave. An example of the RF sensor includes a radar using a radio wave such as a millimeter wave. At this time, the radio wave used for the radar is not limited to a radio wave in a millimeter wave band (e.g., 30 to 300 GHz band), and may be, for example, a radio wave in a microwave band (e.g., 3 to 30 GHz band) or a quasi-millimeter wave band (e.g., 20 to 30 GHz band).

Furthermore another example of the RF sensor includes a wireless positioning sensor (wireless positioning system). An example of the wireless positioning sensor includes a global navigation satellite system (GNSS) sensor. Here, the GNSS sensor may be a global positioning system (GPS) sensor, a GLONASS sensor, a Galileo sensor, or a quasi-zenith satellite system (QZSS) sensor. Note that the wireless positioning sensor is not limited to the GNSS sensor, and an example of the wireless positioning sensor includes a sensor for 3GPP positioning or Wi-Fi/Bluetooth positioning.

The non-RF sensor represents a component that performs measurement without using a radio wave. An example of the non-RF sensor includes a ranging sensor (ranging system) such as a light detection and ranging (LiDAR). At this time, light (e.g., laser light) used by the ranging sensor is not limited to visible light, and may be invisible light such as ultraviolet light, infrared light, and near infrared light. Furthermore, another example of the non-RF sensor includes a sonar using a sound wave such as an ultrasonic wave.

Furthermore, another example of the non-RF sensor includes a camera. Note that the camera is not limited to a visible light camera. For example, the camera may be a near-infrared camera, a mid-infrared camera, or a far-infrared camera. Furthermore, the camera may be a monocular camera or a stereo camera. Furthermore, another example of the non-RF sensor may include an image sensor. At this time, in the image sensor, image plane phase difference pixels may be discretely embedded. In addition, the sensor unit 24 may be a time of flight (ToF) sensor or a microphone.

Furthermore, other examples of the non-RF sensor include an acceleration sensor (e.g., a triaxial acceleration sensor), a speed sensor, a gyroscope sensor, an inertial measurement unit (IMU), and the other motion sensors. Other examples of the non-RF sensor include a magnetic sensor, a barometer, and an altimeter (e.g., barometer).

Furthermore, the sensor unit 24 may be a sensor that acquires various information for predicting the quality of a communication path (e.g., a communication path formed by the wireless communication unit). For example, the sensor unit 24 is a sensor that detects reception S/N of a radio wave received from another communication device (e.g., communication device to be a communication partner or a communication device other than the communication partner). As a matter of course, the information acquired by the sensor unit 24 is not limited to the reception S/N as long as the information can be used to predict the quality of the communication path.

As a matter of course, the sensor unit 24 is not limited to the sensors described above. Furthermore, the sensor unit 24 may be a sensor system obtained by combining a plurality of the sensors described above.

Note that, in some embodiments, the base station 20 may be constituted by a set of a plurality of physical or logical devices. In an example, the base station 20 of the present embodiment may be divided into a plurality of devices, such as a baseband unit (BBU) and a radio unit (RU). The base station 20 may be interpreted as an assembly of the plurality of devices. In addition, the base station may be either or both of the BBU and the RU. The BBU and the RU may be connected via a predetermined interface such as an enhanced common public radio interface (eCPRI).

The RU may also be referred to as remote radio unit (RRU) or radio DoT (RD). Furthermore, the RU may correspond to a gNB distributed unit (gNB-DU) which is described later. Furthermore, the BBU may correspond to a gNB central unit (gNB-CU) which is described later. Furthermore, the RU may be a device integrally formed with an antenna. The antenna of the base station 20, for example, an antenna integrally formed with the RU may adopt an advanced antenna system to support MIMO, such as FD-MIMO, or beamforming. Furthermore, the antenna of the base station 20 may include, for example, 64 transmission antenna ports and 64 reception antenna ports.

In addition, an antenna mounted in the RU may be an antenna panel that includes one or more antenna elements, and the RU may include one or more antenna panels. The RU may be mounted with two types of antenna panels, that is, a horizontally polarized antenna panel and a vertically polarized antenna panel. The RU may be mounted with two types of antenna panels, that is, a right-handed circularly polarized antenna panel and a left-handed circularly polarized antenna panel, or an antenna panel with a polarization direction of 45 degrees from the vertical direction and an antenna panel with a polarization direction of -45 degrees from the vertical direction. A plurality of antennas having the plurality of polarization directions may be mounted on one antenna panel. In addition, the RU may controllably form an independent beam for each of the antenna panels.

A plurality of the base stations 20 may be connected to each other. One or a plurality of base stations 20 may be included in a radio access network (RAN). In this configuration, each of the base stations 20 may be simply referred to as RAN, RAN node, access network (AN), or AN node. RAN in LTE is referred to as enhanced universal terrestrial RAN (EUTRAN), in some cases. RAN in NR is referred to as NGRAN, in some cases. Furthermore, RAN in 6G is referred to as 6GRAN, in some cases. Furthermore, RAN in W-CDMA (UMTS) is referred to as UTRAN, in some cases.

The base station 20 for LTE may be referred to as evolved node B (eNodeB) or eNB. At this time, the EUTRAN includes one or a plurality of eNodeBs (eNBs).
Furthermore, the base station 20 for NR may be referred to as gNodeB or gNB. At this time, the NGRAN includes one or a plurality of gNBs. A base station for 6G may be referred to as 6GNodeB, 6gNodeB, 6GNB, or 6gNB. At this time, the 6GRAN includes one or more 6GNBs. The EUTRAN may include gNB (en-gNB) that is connected to a core network (EPC) in an LTE communication system (EPS). The NGRAN may include ng-eNB that is connected to a core network 5GC in a 5G communication system (5GS).

When the base station 20 is eNB, gNB, 6GNB, or the like, the base station 20 may be referred to as 3GPP access. Furthermore, when the base station 20 is a wireless access point, the base station 20 may be referred to as non-3GPP access. Furthermore, the base station 20 may be the small cell radio unit called remote radio head (RRH). Furthermore, when the base station 20 is gNB, the base station 20 may have a combination of gNB-CU and gNB-DU which has been described above, or may be any of the gNB-CU and the gNB-DU.

Here, the gNB-CU hosts a plurality of upper layers (e.g., radio resource control (RRC), service data adaptation protocol (SDAP), and packet data convergence protocol (PDCP)) of an access stratum, for communication with UE. Meanwhile, the gNB-DU hosts a plurality of lower layers (e.g., radio link control (RLC), medium access control (MAC), and physical layer (PHY)) of the access stratum. In other words, from among messages/pieces of information which is described later, RRC signaling (semi-static notification) may be generated by the gNB CU, and MAC CE or DCI (dynamic notification) may be generated by the gNB-DU. Alternatively, of RRC configurations (semi-static notification), for example, some configurations such as IE: cellGroupConfig may be generated by the gNB-DU, and the rest of the configurations may be generated by the gNB-CU. These configurations may be transmitted and received through an F1 interface which is described later.

The base station 20 may be configured to be communicable with another base station. When the plurality of base stations 20 is eNBs or a combination of an eNB and an en-gNB, these base stations 20 may be connected by an X2 interface. When the plurality of base stations 20 is gNBs or a combination of a gn-eNB and a gNB, these base stations 20 may be connected by an Xn interface. When the plurality of base stations 20 is a combination of a gNB-CU and a gNB-DU, these base stations 20 may be connected by the F1 interface described above. The messages/pieces of information (e.g., RRC signaling, MAC control element (MAC CE), downlink control information (DCI), or the like) which will be described later may be transmitted between the plurality of base stations 20 via, for example, the X2 interface, the Xn interface, the F1 interface, or the like.

A cell provided by the base station 20 is referred to as serving cell, in some cases. The concept of the serving cell includes a primary cell (PCell) and a secondary cell (SCell). When dual connectivity is provided for the terminal device 40, the PCell and zero or one or more SCells that are provided by a master node (MN) are referred to as master cell group, in some cases. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), NR-NR dual connectivity, and the like.
Furthermore, examples of the dual connectivity include NR-6G dual connectivity and 6G-NR dual connectivity.

The serving cell may include PSCell (primary secondary cell or primary SCG cell). When the dual connectivity is provided for the terminal device 40, the PSCell and zero or one or more SCells that are provided by a secondary node (SN) are referred to as secondary cell group (SCG), in some cases. Unless otherwise specifically set (e.g., PUCCH on SCell), a physical uplink control channel (PUCCH) is transmitted on the PCell and PSCell, but is not transmitted on the SCell. Furthermore, radio link failure is detected in the PCell and the PSCell, but is not detected (may not be detected) in the SCell. In this way, the PCell and the PSCell that have special roles in the serving cell are also referred to as a special cell (SpCell).

One downlink component carrier and one uplink component carrier may be associated with one cell. Furthermore, a system bandwidth corresponding to one cell may be divided into a plurality of bandwidth parts (BWPs). At this time, one or a plurality of BWPs may be set to the terminal device 40 and one of the BWPs may be used for the terminal device 40, as an active BWP. In addition, radio resources, for example, frequency band, numerology (subcarrier spacing), or a slot format (slot configuration) that is available for the terminal device 40 may be different between cells, component carriers, or BWPs.

### <2-3. Configuration of transmission path control device>

Next, a configuration of the transmission path control device 30 will be described.

The transmission path control device 30 is a control device that dynamically changes a radio propagation path. The transmission path control device 30 is typically a reconfigurable intelligent surface (RIS). At this time, the RIS may be a cooperative RIS or a blind RIS. In addition, the RIS may be a passive RIS or an active RIS. Note that the transmission path control device 30 may be a device called meta-surface reflector or a device called smart repeater. Furthermore, the transmission path control device 30 is not limited to a device of reflection type, and may be, for example, a device of transmission type. Description of the transmission path control device 30 appearing in the following description can also be referred to as RIS, IRS, IS, meta-surface, smart surface, intelligent surface, metamaterial, or the like.

The transmission path control device 30 has a structure that reflects or transmits an incoming radio wave. For example, the transmission path control device 30 may include, as a structure, a reflector that includes one or a plurality of meta-surfaces (meta-surface elements) enabling dynamic control of a dielectric constant and/or magnetic permeability. In addition, the transmission path control device 30 may include, as a structure, a transmission plate that enables control of a refractive index or the like of the radio wave transmitted. Then, the transmission path control device 30 performs control for a reflection characteristic (e.g., reflection direction/reflection ratio or the like) or a transmission characteristic (e.g., refraction direction/transmittance or the like) of the structure to reflect/transmit the incoming radio wave at a desired angle.

Note that the transmission path control device 30 may be a device installed on an outer wall of a structure such as a building. Installing the transmission path control device 30 on the outer wall of the structure enables reflection or the like of a signal from the base station 20 by the transmission path control device 30 provided on the outer wall of the building and the signal reaches the terminal device 40, when there is an obstruction between the base station 20 and the terminal device 40. Furthermore, the transmission path control device 30 may be a device mounted on a device. At this time, the transmission path control device 30 may be a movable device. The movable device may be a floating device. For example, the transmission path control device 30 may be mounted on a terminal device such as a smartphone, may be mounted on a vehicle such as an automobile, a train, or a human-powered vehicle, may be mounted on a flying object (floating body) such as a balloon, an airplane, or a drone, may be mounted on equipment such as a traffic light, a sign, or a street light, or may be mounted on a home appliance such as a television, a game machine, an air conditioner, a refrigerator, or a lighting fixture.

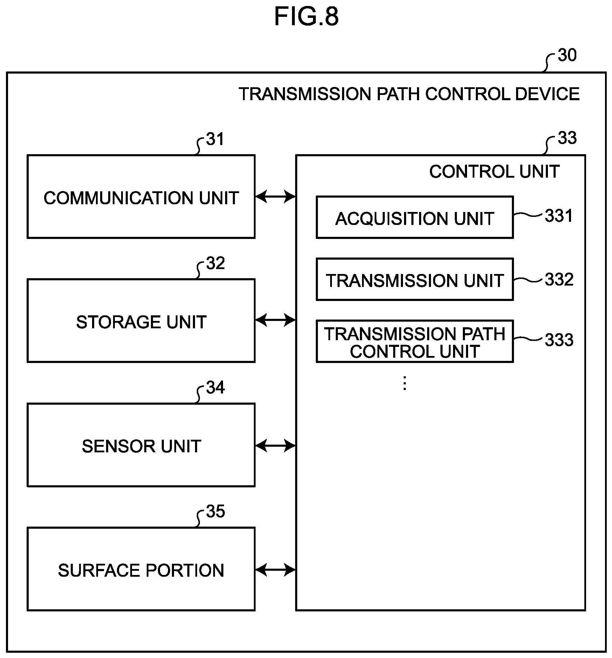

FIG. 8 is a diagram illustrating an exemplary configuration of the transmission path control device 30 according to an embodiment of the present disclosure. The transmission path control device 30 includes a communication unit 31, a storage unit 32, a control unit 33, a sensor unit 34, and a surface portion 35. The transmission path control device 30 may not necessarily include all these configurations. For example, the transmission path control device 30 may not include the sensor unit 34. Furthermore, the transmission path control device 30 may include a plurality of these configurations. For example, the transmission path control device 30 may include a plurality of the surface portions 35. In this configuration, the plurality of the surface portions 35 may face different directions. Note that the configuration illustrated in FIG. 8 represents a functional configuration, and the transmission path control device 30 may have a hardware configuration different from this functional configuration. Furthermore, the functions of the transmission path control device 30 may be implemented in a manner to be distributed to a plurality of physically separated configurations.

The communication unit 31 is a communication interface for communicating with another communication device (e.g., management device 10, base station 20, terminal device 40, control station 50, or another transmission path control device 30). The communication unit 11 may be a network interface or a device connection interface. The communication unit 31 may be a local area network (LAN) interface such as a network interface card (NIC) or may be a universal serial bus (USB) interface including a USB host controller, a USB port, or the like. Furthermore, the communication unit 31 may be a wired interface or a wireless interface. The communication unit 31 is controlled by the control unit 33.

The storage unit 32 is a data readable/writable storage device such as DRAM, SRAM, a flash memory, or a hard disk.

The control unit 33 is a controller ( control device) that controls the units of the transmission path control device 30. The control unit 33 is implemented by a processor such as CPU, MPU, or GPU. For example, the control unit 33 is implemented by executing various programs stored in the storage device in the transmission path control device 30 by the processor, with the RAM or the like as a working area. Note that the control unit 33 may be implemented by an integrated circuit such as ASIC or FPGA. Furthermore, the control unit 33 may be implemented by a GPU. Any of the CPU, MPU, ASIC, FPGA, and GPU can be regarded as the controller. Note that the control unit 33 may include a plurality of physically separated objects. For example, the control unit 33 may include a plurality of semiconductor chips.

The control unit 33 includes an acquisition unit 331, a transmission unit 332, and a transmission path control unit 333. Blocks (the acquisition unit 331 to the transmission path control unit 333) constituting the control unit 33 are functional blocks indicating functions of the control unit 33. These functional blocks may be software blocks or hardware blocks. For example, each of the functional blocks described above may be one software module implemented by software (including microprogram) or one circuit block on a semiconductor chip (die). As a matter of course, each functional block may be one processor or one integrated circuit. The control unit 33 may include functional units different from the above functional blocks. Any configuration method is employed for the functional blocks.

Note that the operations of the control unit 33 may be similar to the operations of the control unit 23 of the base station 20 and the control unit 43 of the terminal device 40. Furthermore, the operations of the control unit 33 may be similar to the operations of the control unit 13 of the management device 10. Furthermore, the control unit 33 may be configured to control the surface portion 35 of each of one or a plurality of other transmission path control devices 30.

The sensor unit 34 is a sensor that acquires various information about wireless communication. For example, the sensor unit 34 is a sensor that acquires information about an object around the device. For example, the sensor unit 34 is a sensor that acquires information about a position, a shape, and a motion of the another object. The sensor unit 34 may be a sensor for detecting a state of the device itself (e.g., a position, moving speed, inclination, vibration, rotation, and the like of the terminal device 40). In addition, the configuration of the sensor unit 34 may be similar to the configuration of the sensor unit 24 included in the base station 20. For example, the sensor unit 34 may be an RF sensor or a non-RF sensor. Furthermore, the sensor unit 34 may be a sensor system in which the RF sensor and the non-RF sensor are combined.

The surface portion 35 is a structure that reflects or transmits an incoming radio wave. For example, the surface portion 35 is a reflector constituted by a meta-surface (meta-surface element) enabling dynamic control of a dielectric constant and/or magnetic permeability. The surface portion 35 may be a transmission plate configured to be able to transmit the incoming radio wave and control a refractive index or the like of the radio wave transmitted. Note that the transmission path control device 30 is not limited to a plate shape. For example, the transmission path control device 30 may have a sheet shape. The meta-surface is, for example, a type of artificial medium (metamaterial) that includes subwavelength structures arranged periodically to achieve an appropriate characteristics (e.g., dielectric constant, magnetic permeability, and the like). The control unit 33 can operate a characteristic (e.g., reflection characteristic or transmission characteristic) of the meta-surface included in the surface portion 35 to control, for example, an amplitude, phase, polarization, or frequency of an incoming radio wave. Note that the structure of the transmission path control device 30 is not limited to a surface shape. The surface portion 35 appearing in the following description can also be referred to as a metamaterial portion 35, a material portion 35, or the like.

### <2-4. Configuration of terminal device>

Next, a configuration of the terminal device 40 will be described.

The terminal device 40 is a wireless communication device that performs wireless communication with another wireless communication device (e.g., base station 20 or another terminal device 40). For the terminal device 40, any form of information processing device (computer) can be employed. For example, the terminal device 40 may be a mobile terminal, such as a mobile phone, smart device (smartphone or tablet), personal digital assistant (PDA), or laptop computer. Furthermore, the terminal device 40 may be an imaging device (e.g., a camcorder) having a communication function. Furthermore, the terminal device 40 may be a motorcycle, a moving relay vehicle, or the like on which a communication device such as a field pickup unit (FPU) is mounted. Furthermore, the terminal device 40 may be a machine to machine (M2M) device or an Internet of things (IoT) device. Furthermore, the terminal device 40 may be a wearable device such as a smart watch.

Furthermore, the terminal device 40 may be an xR device such as an augmented reality (AR) device, a virtual reality (VR) device, or a mixed reality (MR) device. At this time, the xR device may be a glasses-type device such as AR glasses or MR glasses, or may be a head-mounted device such as a VR head-mounted display. When the xR device is used for the terminal device 40, the terminal device 40 may be a standalone device including only a user wearing portion (e.g., eyeglass portion). Furthermore, the terminal device 40 may be a terminal linking device including the user wearing portion (e.g., the eyeglass portion) and a terminal portion (e.g., a smart device) linking with the user wearing portion.

The terminal device 40 may be able to perform NOMA communication with the base station 20. Furthermore, the terminal device 40 may be configured to use an automatic retransmission technology such as HARQ upon communication with the base station 20. The terminal device 40 may be configured to perform sidelink communication with another terminal device 40. The terminal device 40 may be configured to use an automatic retransmission technology such as HARQ upon sidelink communication. The terminal device 40 may be able to perform NOMA communication when performing sidelink communication with the another terminal device 40. The terminal device 40 may be able to perform LPWA communication with another wireless communication device such as the base station 20. In addition, wireless communication used by the terminal device 40 may be millimeter wave wireless communication. The wireless communication used by the terminal device 40, including sidelink communication, may be wireless communication using a radio wave or wireless communication using infrared or visible light, that is, optical wireless communication.

The terminal device 40 may be a movable wireless communication device, that is, a mobile device. The terminal device 40 may be a wireless communication device installed on a mobile object or the mobile object itself. The terminal device 40 may be a vehicle that moves on a road, such as an automobile, bus, truck, or motorcycle, or may be a wireless communication device that is mounted on the vehicle. The mobile object may be a mobile terminal, or may be a mobile object that moves on land (on the ground in a narrow sense), under the ground, on the water, or under the water. Furthermore, the mobile object may be a mobile object that moves in the atmosphere, such as an aircraft, airship, balloon, or a helicopter, or may be a mobile object that moves above the atmosphere, such as an artificial satellite. The mobile object may be an unmanned aerial vehicle (UAV) such as a drone. Furthermore, the terminal device 40 may be a wireless communication device mounted on a mobile object.

The terminal device 40 may be simultaneously connectable to a plurality of base stations 20 or a plurality of cells communicably. When one base station 20 supports a communication area via a plurality of cells (e.g., pCells or sCells), it is possible to combine the plurality of cells by a carrier aggregation (CA) technology, a dual connectivity (DC) technology, or a multi-connectivity (MC) technology to enable communication between the base station 20 and the terminal device 40. Alternatively, it is also possible for the terminal device 40 and a plurality of different base stations 20 to perform communication with each other via cells of different base stations 20 by using a coordinated transmission/reception (coordinated multi-point transmission and reception (CoMP)) technology.

The terminal device 40 may be a relay terminal that relays communication to a remote terminal.

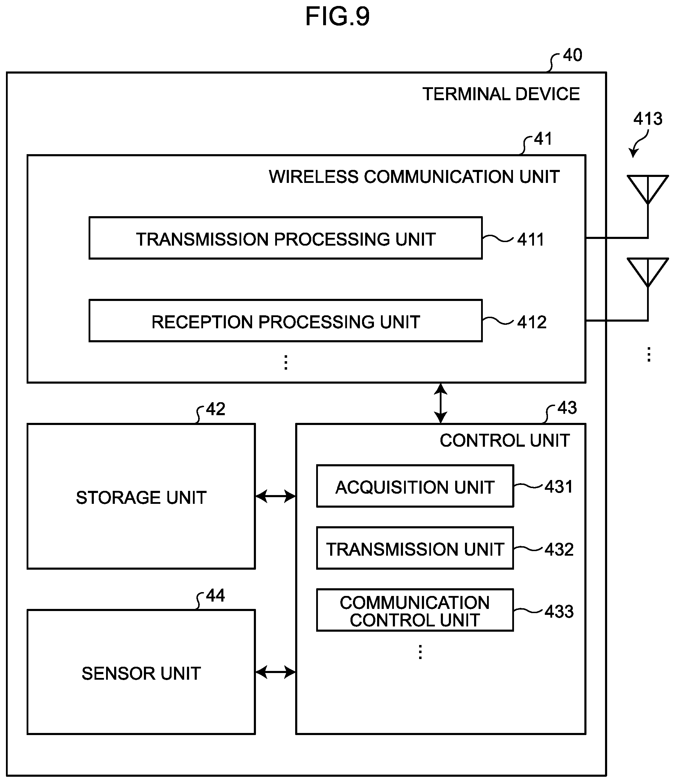

FIG. 9 is a diagram illustrating a configuration of the terminal device 40 according to the present embodiment. The terminal device 40 includes a wireless communication unit 41, a storage unit 42, the control unit 43, and a sensor unit 44. The terminal device 40 may not necessarily include all these configurations. For example, the terminal device 40 may not include the sensor unit 44. Note that the configuration illustrated in FIG. 9 represents a functional configuration, and the terminal device 40 may have a hardware configuration different from this functional configuration. Furthermore, the functions of the terminal device 40 may be implemented in a manner to be distributed to a plurality of physically separated configurations.

The wireless communication unit 41 is a signal processing unit for wireless communication with another wireless communication device (e.g., base station 20 or another terminal device 40). The wireless communication unit 41 is controlled by the control unit 43. The wireless communication unit 41 supports one or a plurality of radio access systems. The wireless communication unit 41 may support at least one of NR, LTE, and 6G. The wireless communication unit 41 may support W-CDMA, cdma2000, and the like in addition to NR, LTE, and 6G. Furthermore, the wireless communication unit 41 may support an automatic retransmission technology such as hybrid automatic repeat request (HARQ).

The wireless communication unit 41 includes a transmission processing unit 411, a reception processing unit 412, and an antenna 413. The wireless communication unit 41 may include a plurality of the transmission processing units 411, reception processing units 412, and antennas 413. When the wireless communication unit 41 supports a plurality of radio access systems, the units of the wireless communication unit 41 may be individually configured for each of the radio access systems. The transmission processing units 411 and the reception processing units 412 may be configured individually for each of LTE, NR, and 6G. The antenna 413 may include a plurality of antenna elements, for example, a plurality of patch antennas. The wireless communication unit 41 may have a beamforming function. For example, the wireless communication unit 41 may have a polarization beamforming function using vertical polarization (V polarization) and horizontal polarization (H polarization) (or polarization beamforming function using dual polarization with a polarization direction of 45 degrees and a polarization direction of -45 degrees from a vertical direction).

The storage unit 42 is a readable/writable storage device such as DRAM, SRAM, a flash memory, or a hard disk. The storage unit 42 functions as storage means for the terminal device 40.

The control unit 43 is a controller that controls the units of the terminal device 40. The control unit 43 controls the wireless communication unit to perform wireless communication with another wireless communication device (e.g., base station 20 or another terminal device 40). The control unit 43 may be implemented by a processor such as CPU or MPU. Specifically, the control unit 23 may be implemented by executing various programs stored in the storage device in the terminal device 40 by the processor, with the RAM or the like as a working area. The control unit 43 may be implemented by an integrated circuit such as ASIC or FPGA. The control unit 43 may be implemented by a GPU. Any of the CPU, MPU, ASIC, FPGA, and GPU can be regarded as the controller. Note that the control unit 43 may include a plurality of physically separated objects. For example, the control unit 43 may include a plurality of semiconductor chips.

The control unit 43 includes an acquisition unit 431, a transmission unit 432, and a communication control unit 433. Blocks (the acquisition unit 431 to the communication control unit 433) constituting the control unit 43 are functional blocks indicating functions of the control unit 43. These functional blocks may be software blocks or hardware blocks. For example, each of the functional blocks described above may be one software module implemented by software (including microprogram) or one circuit block on a semiconductor chip (die). As a matter of course, each functional block may be one processor or one integrated circuit. The control unit 43 may include functional units different from the above functional blocks. Any configuration method is employed for the functional blocks.

Note that the operation of each block constituting the control unit 43 may be similar to the operation of each block included in the control unit 23 of the base station 20 and the operation of each block included in the control unit 53 of the control station 50. Furthermore, the operations of the control unit 23 may be similar to the operations of the control unit 13 of the management device 10.

The sensor unit 44 is a sensor that acquires various information about wireless communication. For example, the sensor unit 44 is a sensor that acquires information about an object around the device. For example, the sensor unit 44 is a sensor that acquires information about a position, a shape, and a motion of the another object. The sensor unit 44 may be a sensor for detecting a state of the device itself (e.g., a position, moving speed, inclination, vibration, rotation, and the like of the terminal device 40). In addition, the configuration of the sensor unit 44 may be similar to the configuration of the sensor unit 24 included in the base station 20. For example, the sensor unit 44 may be an RF sensor or a non-RF sensor. Furthermore, the sensor unit 44 may be a sensor system in which the RF sensor and the non-RF sensor are combined.

### <2-5. Configuration of control station>

Next, a configuration of the control station 50 will be described.

The control station 50 is a control device that performs centralized control of the plurality of transmission path control devices 30. One transmission path control device 30 may be controlled by the control station 50. The control station 50 is also a type of communication device.

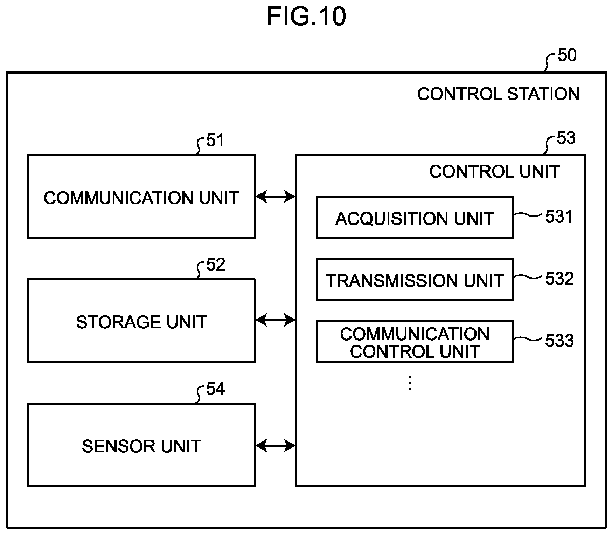

FIG. 10 is a diagram illustrating an exemplary configuration of the control station 50 according to an embodiment of the present disclosure. The control station 50 includes a communication unit 51, a storage unit 52, the control unit 53, and a sensor unit 54. The control station 50 may not necessarily include all these configurations. For example, the control station 50 may not include the sensor unit 54. Note that the configuration illustrated in FIG. 10 represents a functional configuration, and the control station 50 may have a hardware configuration different from this functional configuration. Furthermore, the functions of the control station 50 may be implemented in a manner to be distributed to a plurality of physically separated configurations.

The communication unit 51 is a communication interface for communicating with another communication device (e.g., management device 10, base station 20, transmission path control device 30, terminal device 40, or another control station 50). The communication unit 51 may be a network interface or a device connection interface. The communication unit 51 may be a local area network (LAN) interface such as a network interface card (NIC) or may be a universal serial bus (USB) interface including a USB host controller, a USB port, or the like. Furthermore, the communication unit 51 may be a wired interface or a wireless interface. The communication unit 51 is controlled by the control unit 53.

The storage unit 52 is a data readable/writable storage device such as DRAM, SRAM, a flash memory, or a hard disk.

The control unit 53 is a controller that controls the units of the control station 50. The control unit 53 may be implemented by a processor such as CPU or MPU. Specifically, the control unit 53 may be implemented by executing various programs stored in the storage device in the control station 50 by the processor, with the RAM or the like as a working area. The control unit 53 may be implemented by an integrated circuit such as ASIC or FPGA. The control unit 53 may be implemented by a GPU. Any of the CPU, MPU, ASIC, FPGA, and GPU can be regarded as the controller. Note that the control unit 53 may include a plurality of physically separated objects. For example, the control unit 53 may include a plurality of semiconductor chips.

The control unit 53 includes an acquisition unit 531, a transmission unit 532, and a communication control unit 533. Blocks (the acquisition unit 531 to the communication control unit 533) constituting the control unit 53 are functional blocks indicating functions of the control unit 53. These functional blocks may be software blocks or hardware blocks. For example, each of the functional blocks described above may be one software module implemented by software (including microprogram) or one circuit block on a semiconductor chip (die). As a matter of course, each functional block may be one processor or one integrated circuit. The control unit 53 may include functional units different from the above functional blocks. Any configuration method is employed for the functional blocks.

Note that the operation of each block constituting the control unit 53 may be similar to the operation of each block included in the control unit 23 of the base station 20 and the operation of each block included in the control unit 43 of the terminal device 40. Furthermore, the operations of the control unit 23 may be similar to the operations of the control unit 13 of the management device 10. Furthermore, the operations of the control unit 23 may be similar to the operations of the control unit 33 of the transmission path control device 30. In this case, the control unit 23 may control the surface portions 35 of the plurality of transmission path control devices 30.

The sensor unit 54 is a sensor that acquires various information about wireless communication. For example, the sensor unit 54 is a sensor that acquires information about an object around the device. For example, the sensor unit 54 is a sensor that acquires information about a position, a shape, and a motion of the another object. The sensor unit 54 may be a sensor for detecting a state of the device itself (e.g., a position, moving speed, inclination, vibration, rotation, and the like of the control station 50). In addition, the configuration of the sensor unit 54 may be similar to the configuration of the sensor unit 24 included in the base station 20. For example, the sensor unit 54 may be an RF sensor or a non-RF sensor. Furthermore, the sensor unit 54 may be a sensor system in which the RF sensor and the non-RF sensor are combined.

### <<3. Operations of communication system>>

The configuration of the communication system 1 has been described above. Next, the operation of the communication system 1 of the present embodiment will be described.

As described above, when the plurality of the transmission path control devices 30 is installed in a communication environment, there is a possibility that reflected waves (or transmitted waves (refracted waves)) from the plurality of transmission path control devices 30 cause unexpected interference. In this case, there is a possibility that the originally assumed frequency utilization efficiency may not be achieved and utilization efficiency of radio wave resources may not be achieved.

Note that this problem may also occur when the plurality of the transmission path control devices 30 is not installed in the communication environment (e.g., when only one transmission path control device 30 is installed in the communication environment). For example, a direct wave from a communication device and a reflected wave from the transmission path control device 30 may cause unexpected interference.

The communication system 1 according to the present embodiment performs the following processing (hereinafter, referred to as transmission path control process) to achieve effective use of radio wave resources.

### <3-1. Overview of transmission path control process>

First, a communication device (e.g., base station 20, terminal device 40, or control station 50) acquires the combined wave information about the combined waves formed by radio waves from a plurality of devices, including a radio wave from each transmission path control device 30. The combined wave information will be described later.

Note that the radio waves from the plurality of devices may include not only radio wave from each transmission path control device 30 but also radio waves from one or a plurality of base stations 20. Furthermore, the radio waves from the plurality of devices may include not only the radio wave from each transmission path control device 30 but also radio waves from one or a plurality of the terminal devices 40. As a matter of course, the radio waves from the plurality of devices may include radio waves from one or a plurality of other transmission path control devices 30 in addition to the radio wave from one transmission path control device 30. Note that the number of the transmission path control devices 30 included in the plurality of devices may be one, two, or three or more.

The communication device transmits the combined wave information to the transmission path control device 30. The transmission path control device 30 acquires the combined wave information from the communication device. Then, the transmission path control device 30 performs control relating to the reflection characteristic or the transmission characteristic of the surface portion 35 on the basis of the combined wave information.

Therefore, the communication device can obtain desired combined waves (interference fringes) to be formed, so that high frequency utilization efficiency can be realized.

### <3-2. Combined wave information>

The overview of the transmission path control process has been described above. Next, the combined wave information will be described.

The combined wave information is, for example, information that is transmitted to the transmission path control device 30 by the communication device to form the desired interference fringes. The communication device may add, for transmission, the combined wave information to control information (control signal) for controlling of the transmission path control device 30.

Here, the combined wave information may include at least one piece of information of the following pieces of information (A1) to (A7). As a matter of course, the combined wave information is not limited to the following information (A1) to (A7).

### (A1) Interference fringe information

The combined wave information may include interference fringe information about the interference fringes formed by the radio waves from the plurality of devices. Here, the interference fringe information may be information about at least one of a shape, a direction, and an interval (stripe interval) of the interference fringes formed by the radio waves from the plurality of devices. The interference fringe information may be information specified in advance in a standard, or may be information that specifically specifies the shape, direction, and interval of interference.

### (A2) Information about position of communication device

The combined wave information may include position information of a communication device (e.g., base station 20 and/or terminal device 40) that performs communication in an environment in which the transmission path control device 30 is installed. The position information of the communication device may be position information (e.g., position information of the communication device measured by a GNSS sensor) of the communication device in the global coordinate system, relative position information from the transmission path control device 30, or area information obtained by dividing a coverage area of the base station 20 into specific ranges.

### (A3) Information about one or plurality of other transmission path control devices 30

When a plurality of transmission path control devices 30 is included in the plurality of devices, the combined wave information to be transmitted to the transmission path control device 30 may include information about one or a plurality of other transmission path control devices 30 that cooperatively forms the combined waves. The information about one or a plurality of other transmission path control devices 30 is, for example, position information and/or performance information about the transmission path control devices 30 (e.g., RISs) that operate in cooperation. The information about one or a plurality of other transmission path control devices 30 may be information indicating how the transmission path control devices 30 (e.g., RIS) operating in cooperation operate the meta-surfaces included in the transmission path control devices 30.

### (A4) Setting information about reflection characteristic or transmission characteristic of structure

The combined wave information may include setting information about the reflection characteristic or the transmission characteristic of the structure (surface portion 35) included in the transmission path control device 30. For example, the combined wave information may include, as the setting information, information about at least one of the dielectric constant and the magnetic permeability of one or a plurality of meta-surfaces of the surface portion 35.

### (A5) Reception point information

The combined wave information may include reception point information. The reception point information is information about one or more positions where a desired wave (e.g., a wave having an intensity equal to or greater than a predetermined threshold) is formed in an area where the interference fringes are formed. For example, the information about a position of the reception point may be information about a position where a plurality of radio waves overlap in phase or a position where a plurality of radio waves overlap in opposite phase, in the area where the interference fringes are formed. The reception point information may be position information of the reception point in the global coordinate system, relative position information of the reception point from the transmission path control device 30, or the area information obtained by dividing the coverage area of the base station 20 into specific ranges.

### (A6) Beam pattern information about beam pattern selected by communication device

The combined wave information may include beam pattern information about a beam pattern selected by the communication device. The beam pattern information is information for specifying how the transmission path control device 30 (e.g., RIS) operates the meta-surface. The beam pattern information is stored, for example, when the communication device (e.g., base station 20 or terminal device 40) calculates the shape of the interference fringes.

### (A7) Schedule information about communication using transmission path control device 30

The combined wave information may include schedule information about communication using the transmission path control device 30. The schedule information is information for notifying which radio resource is used for communication, by the communication device (e.g., base station 20 or terminal device 40).

### <<4. Examples>>

The operation of the communication system 1 has been described above. Next, examples relating to the transmission path control process described above will be described.

In the following examples, the communication environment is assumed in which the base station 20 and the terminal device 40 communicate with each other. In this communication environment, a plurality of RISs is installed as the transmission path control device 30. In the following description, the plurality of RISs may be referred to as RIS#1 to RIS#N, in some cases. Here, N is any integer. Each of the installed RISs is, for example, the passive RIS. Each of the installed RISs may be the active RIS. Note that the RISs appearing in the following description can be replaced with the transmission path control devices 30 other than the RISs.

Each of the RISs controls a transmission path on the basis of the combined wave information acquired from a communication device. For example, the RIS performs control relating to the reflection characteristic or the transmission characteristic of the surface portion 35 on the basis of the combined wave information acquired from the communication device. For example, the RIS controls the dielectric constant and/or magnetic permeability of the one or plurality of meta-surfaces of the surface portion 35 so that an interval between interference fringes formed by a reflected wave (e.g., reflected wave beam) of the RIS and a reflected wave (e.g., reflected wave beam) of another RIS operating in cooperation therewith may have a desired thickness and/or interval.

The operation of the RIS is activated, for example, in the following cases of (1) to (4).
(1) Activation by control information from the communication device
(2) Activation by signaling between RISs
(3) Activation based on a timer held by RIS itself
(4) Triggering based on a change in an environment where RISs are arranged

On the premise of the above description, some examples relating to the transmission path control process will be described below.

### <4-1. Example 1>

In Example 1, control information from a communication device that performs communication in a communication environment where RISs are installed activates the operation of each of the RISs. In Example 1, the communication device is the base station 20 or the terminal device 40.

In Example 1, the communication device (e.g., base station 20/terminal device 40) transmits the control information to each RIS (or control device for the RIS) upon communication with another communication device (e.g., terminal device 40/base station 20) as a communication partner. For example, when transmitting data to the another communication device, the communication device transmits control information to each RIS. The communication device may transmit the control information to each RIS (or control device for the RIS) upon reception of the data. The control information includes combined wave information about combined waves assumed to be formed upon communication between the communication device and the another communication device. The combined wave information may include the information indicated in <3-2. Combined wave information> described above. Note that communication between the communication device and the another communication device may be uplink communication, downlink communication, or sidelink communication. Note that the communication device may transmit the control information to each RIS (or control device for the RIS) when establishing a link with the another communication device.

In Example 1, the operation of the RIS is activated, for example, in the following cases of (1-1) to (1-5).
(1-1) Activation by the control information transmitted from the base station 20
(1-2) Activation by the control information transmitted from the base station 20 via the control station 50
(1-3) Activation by the control information transmitted from the terminal device 40
(1-4) Activation by the control information transmitted from the terminal device 40 via the control station 50
(1-5) Activation by the control information transmitted from the terminal device 40 via the base station 20 and the control station 50

Hereinafter, the transmission path control processes according to Example 1 will be described with reference to sequence diagrams.

### <Example 1-1>

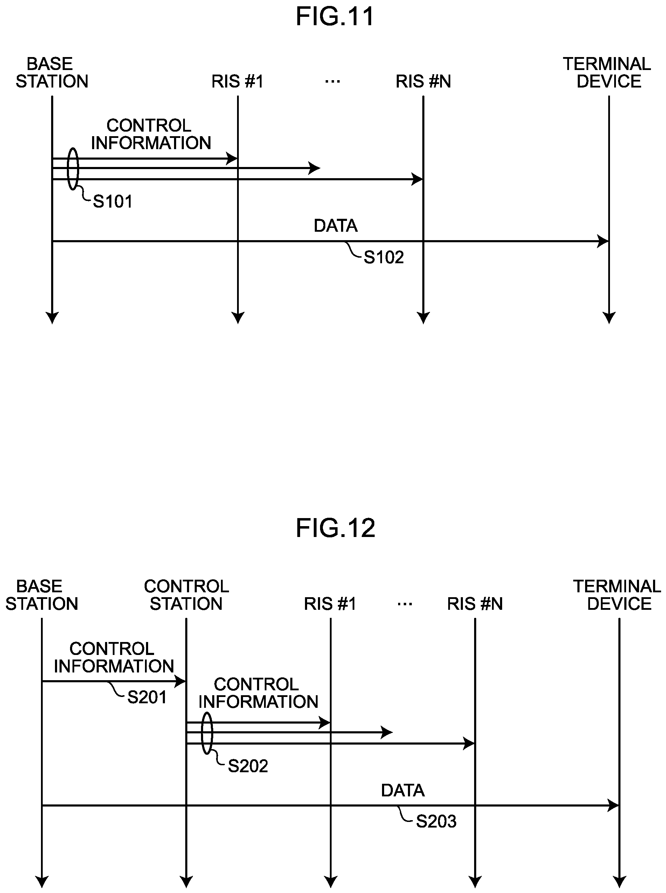

FIG. 11 is a sequence diagram illustrating a transmission path control process according to Example 1-1. In Example 1-1, the operation of each RIS is activated by the control information directly transmitted from the base station 20. Hereinafter, the transmission path control process according to Example 1-1 will be described with reference to FIG. 11.

The acquisition unit 231 of the base station 20 acquires the combined wave information. The transmission unit 232 of the base station 20 transmits the control information (control signal) relating to the control of the transmission path, to one or a plurality of RISs that is caused to perform the operation of the present embodiment (Step S101). The control information includes the combined wave information described above.

The base station 20 may transmit the control information to each RIS by using a predetermined physical channel. For example, the base station 20 may use a physical downlink control channel (PDCCH) or a physical downlink shared channel (PDSCH) to transmit the control information to the RIS. In addition, the base station 20 may transmit the control information to the RISs by using individually defined frequency channels for the RISs. In addition, the base station 20 may transmit the control information to each RIS by using an unlicensed band channel. In addition, the base station 20 may transmit the control information to each RIS by using a frequency channel allocated for signal transmission to another system.

The base station 20 may change a transmission form of the control information according to a channel to be used. For example, when transmitting the control information by using the unlicensed band, the base station 20 may add a physical header based on the 802.11 standard, for transmission. At this time, the base station 20 may transmit (groupcast) the control information to the plurality of RISs related to the operation, or may transmit (broadcast) the control information to all the RISs. When broadcasting the control information, the base station 20 may store information for identifying one or a plurality of RISs related to the operation (i.e., information for identifying the one or plurality of RISs that controls the transmission path by using the combined wave information), in the control information (or in the combined wave information).

The acquisition unit 331 of each RIS acquires the control information from the base station 20. Then, the transmission path control unit 333 of the RIS performs processing relating to control of the transmission path on the basis of the combined wave information included in the control information. For example, the RIS performs control relating to the reflection characteristic or the transmission characteristic of the surface portion 35 on the basis of the combined wave information. For example, the RIS operates the dielectric constant and/or magnetic permeability of one or a plurality of meta-surfaces of the surface portion 35 on the basis of the combined wave information.

Thereafter, the communication control unit 233 of the base station 20 transmits the data to the terminal device 40 (Step S102).

### <Example 1-2>

FIG. 12 is a sequence diagram illustrating a transmission path control process according to Example 1-2. In Example 1-2, the operation of each RIS is activated by the control information indirectly transmitted from the base station 20. Specifically, in Example 1-2, the operation of each RIS is activated by the control information transmitted from the base station 20 via the control station 50. The control station 50 is a device that performs centralized control on the plurality of RISs. The control station 50 may be regarded as a communication device that transmits the combined wave information to each of the RISs. Hereinafter, the transmission path control process according to Example 1-2 will be described with reference to FIG. 12.

The acquisition unit 231 of the base station 20 acquires the combined wave information. The transmission unit 232 of the base station 20 transmits the control information (control signal) relating to the control of the transmission path, to the control station 50 (Step S201). The control information includes the combined wave information described above. Similarly to Example 1-1 described above, the base station 20 may transmit the control information by using the predetermined physical channel, may transmit the control information by using the individually defined frequency channels for the RISs, may transmit the control information by using the unlicensed band channel, or may transmit the control information by using the frequency channel allocated for signal transmission to another system. The base station 20 may change a transmission form of the control information according to a channel to be used.

The acquisition unit 531 of the control station 50 acquires the control information from the base station 20. The transmission unit 532 of the control station 50 transmits the control information (control signal) relating to the control of the transmission path, to one or a plurality of RISs that is caused to perform the operation of the present embodiment (Step S202). The control information includes the combined wave information described above.

The control station 50 may transmit the control information to each RIS by using the predetermined physical channel. For example, the control station 50 may transmit the control information to the RIS by using the PDCCH or the PDSCH. In addition, the base station 20 may use the individually defined frequency channels for the RISs to transmit the control information to the RISs. In addition, the control station 50 may transmit the control information to each RIS by using an unlicensed band channel. In addition, the control station 50 may transmit the control information to each RIS by using a frequency channel allocated for signal transmission to another system.

The control station 50 may change the transmission form of the control information according to a channel to be used. For example, when transmitting the control information by using the unlicensed band, the control station 50 may add a physical header based on the 802.11 standard, for transmission. At this time, the control station 50 may transmit (groupcast) the control information to the plurality of RISs related to the operation, or may transmit (broadcast) the control information to all the RISs. When broadcasting the control information, the control station 50 may store information for identifying one or a plurality of RISs related to the operation (i.e., information for identifying the one or plurality of RISs that controls the transmission path by using the combined wave information), in the control information (or in the combined wave information).

The acquisition unit 331 of each RIS acquires the control information from the control station 50. Then, the transmission path control unit 333 of the RIS performs processing relating to control of the transmission path on the basis of the combined wave information included in the control information. For example, the RIS performs control relating to the reflection characteristic or the transmission characteristic of the surface portion 35 on the basis of the combined wave information. For example, the RIS operates the dielectric constant and/or magnetic permeability of one or a plurality of meta-surfaces of the surface portion 35 on the basis of the combined wave information.

Note that typically, the control device for each RIS is a control unit (e.g., control unit 33) included in the RIS. However, the control station 50 or the control unit 53 of the control station 50 may function as the control device for the RIS. In this configuration, the surface portions 35 of the RISs may be subjected to centralized control by the control station 50. In this configuration, the control unit 53 of the control station 50 may perform control relating to the reflection characteristic or the transmission characteristic of the surface portion 35 of each RIS on the basis of the combined wave information acquired in Step S201. For example, the control station 50 may operate the dielectric constant and/or magnetic permeability of the one or plurality of meta-surfaces of the surface portion 35 of each RIS on the basis of the combined wave information.

Thereafter, the communication control unit 233 of the base station 20 transmits the data to the terminal device 40 (Step S203).

### <Example 1-3>

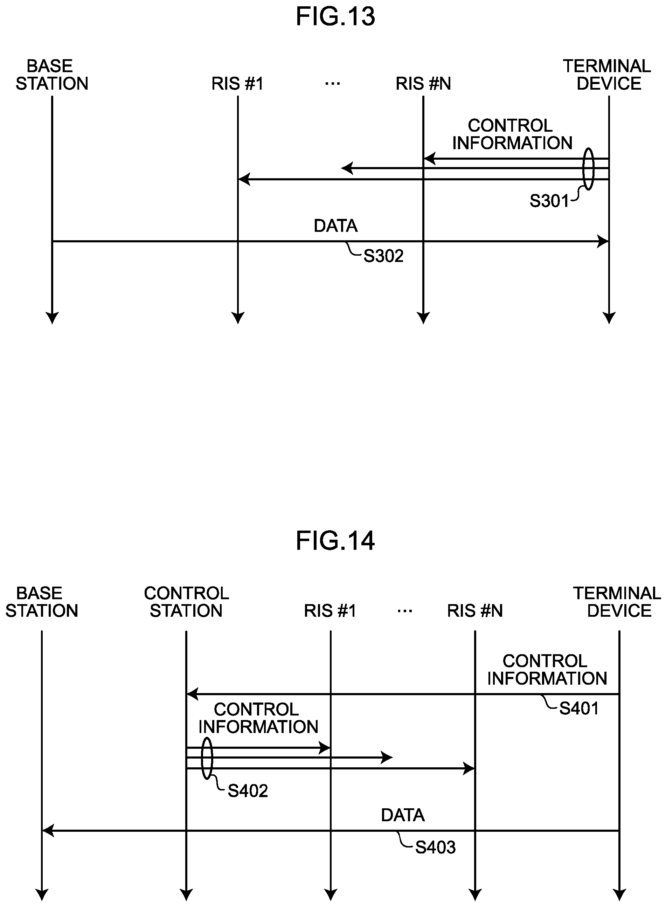

FIG. 13 is a sequence diagram illustrating a transmission path control process according to Example 1-3. In Example 1-3, the operation of each RIS is activated by the control information directly transmitted from the terminal device 40. Hereinafter, the transmission path control process according to Example 1-3 will be described with reference to FIG. 13.

The acquisition unit 431 of the terminal device 40 acquires the combined wave information. The transmission unit 432 of the terminal device 40 transmits the control information (control signal) relating to the control of the transmission path, to one or a plurality of RISs that is caused to perform the operation of the present embodiment (Step S301). The control information includes the combined wave information described above.

The terminal device 40 may transmit the control information to each RIS by using the predetermined physical channel. For example, the terminal device 40 may transmit the control information to the RIS by using the PDCCH or the PDSCH. In addition, the terminal device 40 may use the individually defined frequency channels for the RISs, to transmit the control information to the RISs. In addition, the terminal device 40 may transmit the control information to each RIS by using an unlicensed band channel. In addition, the terminal device 40 may transmit the control information to each RIS by using a frequency channel allocated for signal transmission to another system.

The terminal device 40 may change the transmission form of the control information according to a channel to be used. For example, when transmitting the control information by using the unlicensed band, the terminal device 40 may add a physical header based on the 802.11 standard, for transmission. At this time, the terminal device 40 may transmit (groupcast) the control information to the plurality of RISs related to the operation, or may transmit (broadcast) the control information to all the RISs. When broadcasting the control information, the terminal device 40 may store information for identifying one or a plurality of RISs related to the operation (i.e., information for identifying the one or plurality of RISs that controls the transmission path by using the combined wave information), in the control information (or in the combined wave information).

The acquisition unit 331 of each RIS acquires the control information from the terminal device 40. Then, the transmission path control unit 333 of the RIS performs processing relating to control of the transmission path on the basis of the combined wave information included in the control information. For example, the RIS performs control relating to the reflection characteristic or the transmission characteristic of the surface portion 35 on the basis of the combined wave information. For example, the RIS operates the dielectric constant and/or magnetic permeability of one or a plurality of meta-surfaces of the surface portion 35 on the basis of the combined wave information.

Thereafter, the communication control unit 433 of the terminal device 40 transmits the data to the base station 20 (Step S302).

### <Example 1-4>

FIG. 14 is a sequence diagram illustrating a transmission path control process according to Example 1-4. In Example 1-4, the operation of each RIS is activated by the control information indirectly transmitted from the terminal device 40. Specifically, in Example 1-4, the operation of each RIS is activated by the control information transmitted from the terminal device 40 via the control station 50. The control station 50 is a device that performs centralized control on the plurality of RISs. The control station 50 may be regarded as a communication device that transmits the combined wave information to each of the RISs. Hereinafter, the transmission path control process according to Example 1-4 will be described with reference to FIG. 14.

The acquisition unit 431 of the terminal device 40 acquires the combined wave information. The transmission unit 432 of the terminal device 40 transmits the control information (control signal) relating to the control of the transmission path, to the control station 50 (Step S401). The control information includes the combined wave information described above. Similarly to Example 1-3 described above, the terminal device 40 may transmit the control information by using the predetermined physical channel, may transmit the control information by using the individually defined frequency channels for the RISs, may transmit the control information by using the unlicensed band channel, or may transmit the control information by using the frequency channel allocated for signal transmission to another system. The terminal device 40 may change the transmission form of the control information according to a channel to be used.

The acquisition unit 531 of the control station 50 acquires the control information from the terminal device 40. The transmission unit 532 of the control station 50 transmits the control information (control signal) relating to the control of the transmission path, to one or a plurality of RISs that is caused to perform the operation of the present embodiment (Step S402). The control information includes the combined wave information described above.

The control station 50 may transmit the control information to each RIS by using the predetermined physical channel. For example, the control station 50 may transmit the control information to the RIS by using the PDCCH or the PDSCH. In addition, the terminal device 40 may use the individually defined frequency channels for the RISs, to transmit the control information to the RISs. In addition, the control station 50 may transmit the control information to each RIS by using an unlicensed band channel. In addition, the control station 50 may transmit the control information to each RIS by using a frequency channel allocated for signal transmission to another system.

The control station 50 may change the transmission form of the control information according to a channel to be used. For example, when transmitting the control information by using the unlicensed band, the control station 50 may add a physical header based on the 802.11 standard, for transmission. At this time, the control station 50 may transmit (groupcast) the control information to the plurality of RISs related to the operation, or may transmit (broadcast) the control information to all the RISs. When broadcasting the control information, the control station 50 may store information for identifying one or a plurality of RISs related to the operation (i.e., information for identifying the one or plurality of RISs that controls the transmission path by using the combined wave information), in the control information (or in the combined wave information).

The acquisition unit 331 of each RIS acquires the control information from the control station 50. Then, the transmission path control unit 333 of the RIS performs processing relating to control of the transmission path on the basis of the combined wave information included in the control information. For example, the RIS performs control relating to the reflection characteristic or the transmission characteristic of the surface portion 35 on the basis of the combined wave information. For example, the RIS operates the dielectric constant and/or magnetic permeability of one or a plurality of meta-surfaces of the surface portion 35 on the basis of the combined wave information.

Note that typically, the control device for each RIS is a control unit (e.g., control unit 33) included in the RIS. However, the control station 50 or the control unit 53 of the control station 50 may function as the control device for the RIS. In this configuration, the surface portions 35 of the RISs may be subjected to centralized control by the control station 50. In this configuration, the control unit 53 of the control station 50 may perform control relating to the reflection characteristic or the transmission characteristic of the surface portion 35 of each RIS on the basis of the combined wave information acquired in Step S401. For example, the control station 50 may operate the dielectric constant and/or magnetic permeability of the one or plurality of meta-surfaces of the surface portion 35 of each RIS on the basis of the combined wave information.

Thereafter, the communication control unit 433 of the terminal device 40 transmits the data to the base station 20 (Step S403).

### <Example 1-5>

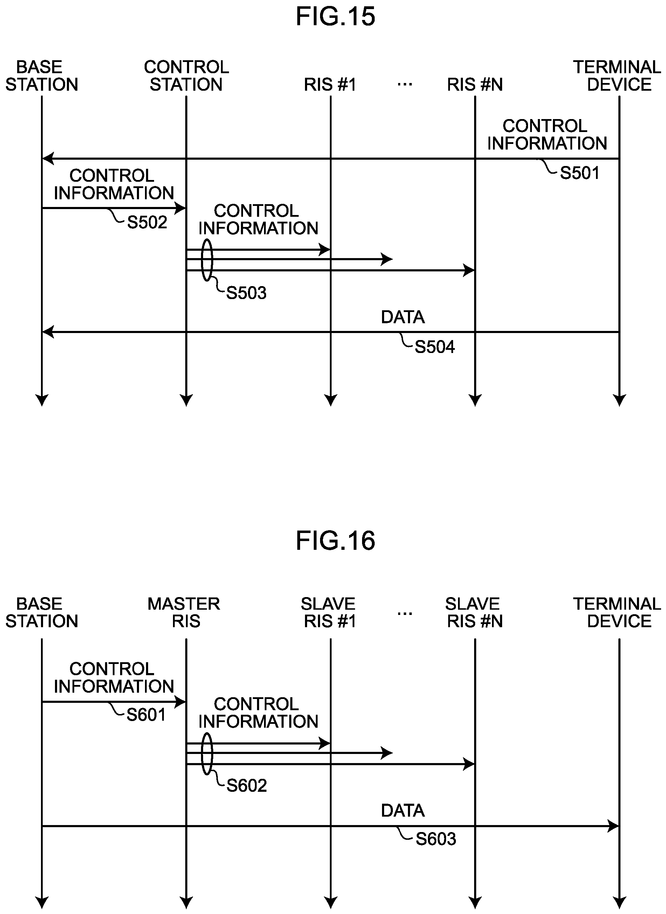

FIG. 15 is a sequence diagram illustrating a transmission path control process according to Example 1-5. In Example 1-5, the operation of each RIS is activated by the control information indirectly transmitted from the terminal device 40. Specifically, in Example 1-5, the operation of each RIS is activated by the control information transmitted from the terminal device 40 via the base station 20 and the control station 50. The control station 50 is a device that performs centralized control on the plurality of RISs. The control station 50 may be regarded as a communication device that transmits the combined wave information to each of the RISs. Hereinafter, the transmission path control process according to Example 1-5 will be described with reference to FIG. 15.

The acquisition unit 431 of the terminal device 40 acquires the combined wave information. The transmission unit 432 of the terminal device 40 transmits the control information (control signal) relating to the control of the transmission path, to the base station 20 (Step S501). The acquisition unit 231 of the base station 20 acquires the control information from the terminal device 40. The transmission unit 232 of the base station 20 transmits the control information (control signal) relating to the control of the transmission path, to the control station 50 (Step S502). The control information includes the combined wave information described above. Similarly to Example 1-3 described above, the terminal device 40 may transmit the control information by using the predetermined physical channel, may transmit the control information by using the individually defined frequency channels for the RISs, may transmit the control information by using the unlicensed band channel, or may transmit the control information by using the frequency channel allocated for signal transmission to another system. The terminal device 40 may change the transmission form of the control information according to a channel to be used.

The acquisition unit 531 of the control station 50 acquires the control information from the terminal device 40. The transmission unit 532 of the control station 50 transmits the control information (control signal) relating to the control of the transmission path, to one or a plurality of RISs that is caused to perform the operation of the present embodiment (Step S503). The control information includes the combined wave information described above. Similarly to Example 1-4 described above, the terminal device 40 may transmit the control information by using the predetermined physical channel, may transmit the control information by using the individually defined frequency channels for the RISs, may transmit the control information by using the unlicensed band channel, or may transmit the control information by using the frequency channel allocated for signal transmission to another system. Similarly to Example 1-4 described above, the control station 50 may change the transmission form of the control information according to a channel to be used.

The acquisition unit 331 of each RIS acquires the control information from the control station 50. Then, the transmission path control unit 333 of the RIS performs processing relating to control of the transmission path on the basis of the combined wave information included in the control information. For example, the RIS performs control relating to the reflection characteristic or the transmission characteristic of the surface portion 35 on the basis of the combined wave information. For example, the RIS operates the dielectric constant and/or magnetic permeability of one or a plurality of meta-surfaces of the surface portion 35 on the basis of the combined wave information.

Note that typically, the control device for each RIS is a control unit (e.g., control unit 33) included in the RIS. However, the control station 50 or the control unit 53 of the control station 50 may function as the control device for the RIS. In this configuration, the surface portions 35 of the RISs may be subjected to centralized control by the control station 50. In this configuration, the control unit 53 of the control station 50 may perform control relating to the reflection characteristic or the transmission characteristic of the surface portion 35 of each RIS on the basis of the combined wave information acquired in Step S502. For example, the control station 50 may operate the dielectric constant and/or magnetic permeability of the one or plurality of meta-surfaces of the surface portion 35 of each RIS on the basis of the combined wave information.

Thereafter, the communication control unit 433 of the terminal device 40 transmits the data to the base station 20 (Step S504).

### <4-2. Example 2>

In Example 2, signaling between RISs activates the operation of each RIS. In Example 2, the communication device is the base station 20 or the terminal device 40.

In Example 2, the communication device (e.g., base station 20/terminal device 40) transmits the combined wave information to each RIS (or the control device for the RIS) via one RIS from among a plurality of RISs including RISs to be controlled.

In Example 2, the plurality of RISs is divided into a master RIS (also referred to as leader RIS) that determines cooperative operation of the plurality of RISs and slave RISs (follower RISs) that determine operations based on information signaled from the master RIS. The cooperative RIS from among the plurality of RISs may be used as the master RIS. The master RIS performs signaling to form the interference fringes at regular time intervals or at timing of triggering by a communication device (e.g., base station 20/terminal device 40). When starting the operation of the present example, the master RIS transmits the control information (control signal) for triggering the operation of the present example, to the slave RISs that operate in cooperation.

The control information includes the combined wave information about the combined wave assumed to be formed when a communication device (e.g., base station 20/terminal device 40) and another communication device (e.g., terminal device 40/base station 20) as a communication partner communicate with each other. The combined wave information may include the information indicated in <3-2. Combined wave information> described above. Note that communication between the communication device and the another communication device may be uplink communication, downlink communication, or sidelink communication.

Note that the communication device may transmit the control information to the master RIS (or control device for the master RIS), upon communication with the another communication device. Furthermore, the communication device may transmit the control information to the master RIS (or control device for the master RIS) when establishing a link with the another communication device.

In Example 2, the operation of the RIS is activated, for example, in the following cases of (2-1) to (2-3).
(2-1) Activation by the control information transmitted from the base station 20 via the master RIS
(2-2) Activation by the control information transmitted from the terminal device 40 via the master RIS
(2-3) Activation by the control information transmitted from the terminal device 40 via the base station 20 and the master RIS

Hereinafter, the transmission path control processes according to Example 2 will be described with reference to sequence diagrams.

### <Example 2-1>

FIG. 16 is a sequence diagram illustrating a transmission path control process according to Example 2-1. In Example 2-1, the operation of each RIS is activated by the control information transmitted from the base station 20 via the master RIS. The master RIS may be regarded as a communication device that transmits the combined wave information to each of the slave RISs. Hereinafter, the transmission path control process according to Example 2-1 will be described with reference to FIG. 16.

The acquisition unit 231 of the base station 20 acquires the combined wave information. The transmission unit 232 of the base station 20 transmits the control information (control signal) relating to the control of the transmission path, to the master RIS (Step S601). The control information includes the combined wave information described above. Similarly to Example 1-1 described above, the base station 20 may transmit the control information by using the predetermined physical channel, may transmit the control information by using the individually defined frequency channels for the RISs, may transmit the control information by using the unlicensed band channel, or may transmit the control information by using the frequency channel allocated for signal transmission to another system. The base station 20 may change a transmission form of the control information according to a channel to be used.

The acquisition unit 331 of the master RIS acquires the control information from the base station 20. The transmission unit 332 of the master RIS transmits the control information (control signal) relating to the control of the transmission path, to one or a plurality of the slave RISs that is caused to perform the operation of the present embodiment (Step S602). The control information includes the combined wave information described above.

The master RIS may transmit the control information to each of the slave RIS by using the predetermined physical channel. For example, the master RIS may transmit the control information to the slave RIS by using the PDCCH or the PDSCH. In addition, the base station 20 may use the individually defined frequency channels for the RISs to transmit the control information to the slave RISs. In addition, the master RIS may transmit the control information to each slave RIS by using the unlicensed band channel. In addition, the master RIS may transmit the control information to each slave RIS by using a frequency channel allocated for signal transmission to another system.

The master RIS may change the transmission form of the control information according to a channel to be used. For example, when transmitting the control information by using the unlicensed band, the master RIS may add a physical header based on the 802.11 standard, for transmission. At this time, the master RIS may transmit (groupcast) the control information to the plurality of RISs related to the operation, or may transmit (broadcast) the control information to all the slave RISs. When broadcasting the control information, the master RIS may store information for identifying one or a plurality of slave RISs related to the operation (i.e., information for identifying the one or plurality of slave RISs that controls the transmission path by using the combined wave information), in the control information (or in the combined wave information).

The acquisition unit 331 of each slave RIS acquires the control information from the master RIS. Then, the transmission path control unit 333 of the master RIS and/or the slave RIS performs processing relating to control of the transmission path on the basis of the combined wave information included in the control information. For example, the master RIS and/or the slave RIS performs control relating to the reflection characteristic or the transmission characteristic of the surface portion 35 on the basis of the combined wave information. For example, the master RIS and/or the slave RIS operates the dielectric constant and/or magnetic permeability of one or a plurality of meta-surfaces of the surface portion 35 on the basis of the combined wave information.

Note that typically, a control device for each slave RIS is a control unit (e.g., control unit 33) included in the slave RIS. However, the master RIS or the control unit 33 of the master RIS may function as the control device for each slave RIS. In this configuration, the surface portion 35 of each slave RIS may be subjected to centralized control by the master RIS. In this configuration, the control unit 33 of the master RIS may perform control relating to the reflection characteristic or the transmission characteristic of the surface portion 35 of each slave RIS on the basis of the combined wave information acquired in Step S601. For example, the master RIS may operate the dielectric constant and/or magnetic permeability of the one or plurality of meta-surfaces of the surface portion 35 of each slave RIS on the basis of the combined wave information. Note that when the master RIS changes the interference fringes at fixed time intervals, the master RIS and/or the slave RIS may operate so as to periodically form specific interference fringes in a preset specific area.

Thereafter, the communication control unit 233 of the base station 20 transmits the data to the terminal device 40 (Step S603).

### <Example 2-2>

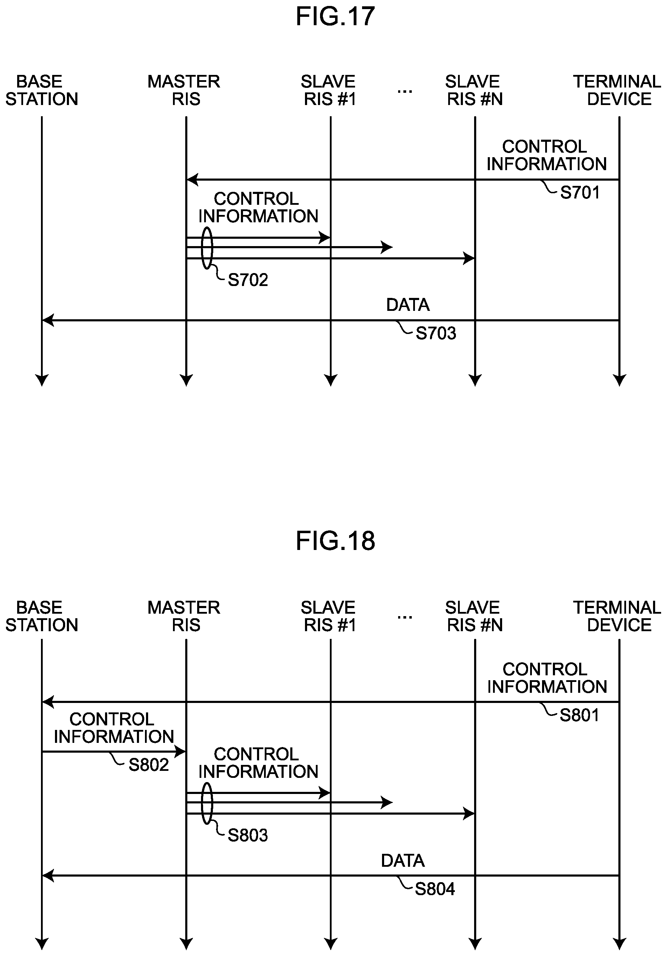

FIG. 17 is a sequence diagram illustrating a transmission path control process according to Example 2-2. In Example 2-2, the operation of each RIS is activated by the control information transmitted from the terminal device 40 via the control station 50. The master RIS may be regarded as a communication device that transmits the combined wave information to each of the slave RISs. Hereinafter, the transmission path control process according to Example 2-2 will be described with reference to FIG. 17.

The acquisition unit 431 of the terminal device 40 acquires the combined wave information. The transmission unit 432 of the terminal device 40 transmits the control information (control signal) relating to the control of the transmission path, to the master RIS (Step S701). The control information includes the combined wave information described above. Similarly to Example 1-3 described above, the terminal device 40 may transmit the control information by using the predetermined physical channel, may transmit the control information by using the individually defined frequency channels for the RISs, may transmit the control information by using the unlicensed band channel, or may transmit the control information by using the frequency channel allocated for signal transmission to another system. The terminal device 40 may change the transmission form of the control information according to a channel to be used.

The acquisition unit 331 of the master RIS acquires the control information from the terminal device 40. The transmission unit 332 of the master RIS transmits the control information (control signal) relating to the control of the transmission path, to one or a plurality of the slave RISs that is caused to perform the operation of the present embodiment (Step S702). The control information includes the combined wave information described above.

The master RIS may transmit the control information to each of the slave RIS by using the predetermined physical channel. For example, the master RIS may transmit the control information to the slave RIS by using the PDCCH or the PDSCH. In addition, the terminal device 40 may use the individually defined frequency channels for the RISs to transmit the control information to the slave RISs. In addition, the master RIS may transmit the control information to each slave RIS by using the unlicensed band channel. In addition, the master RIS may transmit the control information to each slave RIS by using a frequency channel allocated for signal transmission to another system.

The master RIS may change the transmission form of the control information according to a channel to be used. For example, when transmitting the control information by using the unlicensed band, the master RIS may add a physical header based on the 802.11 standard, for transmission. At this time, the master RIS may transmit (groupcast) the control information to the plurality of slave RISs related to the operation, or may transmit (broadcast) the control information to all the slave RISs. When broadcasting the control information, the master RIS may store information for identifying one or a plurality of slave RISs related to the operation (i.e., information for identifying the one or plurality of slave RISs that controls the transmission path by using the combined wave information), in the control information (or in the combined wave information).

The acquisition unit 331 of each slave RIS acquires the control information from the master RIS. Then, the transmission path control unit 333 of the master RIS and/or the slave RIS performs processing relating to control of the transmission path on the basis of the combined wave information included in the control information. For example, the master RIS and/or the slave RIS performs control relating to the reflection characteristic or the transmission characteristic of the surface portion 35 on the basis of the combined wave information. For example, the master RIS and/or the slave RIS operates the dielectric constant and/or magnetic permeability of one or a plurality of meta-surfaces of the surface portion 35 on the basis of the combined wave information.

Note that typically, a control device for each slave RIS is a control unit (e.g., control unit 33) included in the slave RIS. However, the master RIS or the control unit 33 of the master RIS may function as the control device for each slave RIS. In this configuration, the surface portion 35 of each slave RIS may be subjected to centralized control by the master RIS. In this configuration, the control unit 33 of the master RIS may perform control relating to the reflection characteristic or the transmission characteristic of the surface portion 35 of each slave RIS on the basis of the combined wave information acquired in Step S701. For example, the master RIS may operate the dielectric constant and/or magnetic permeability of the one or plurality of meta-surfaces of the surface portion 35 of each slave RIS on the basis of the combined wave information. Note that when the master RIS changes the interference fringes at fixed time intervals, the master RIS and/or the slave RIS may operate so as to periodically form specific interference fringes in a preset specific area.

Thereafter, the communication control unit 433 of the terminal device 40 transmits the data to the base station 20 (Step S703).

### <Example 2-3>

FIG. 18 is a sequence diagram illustrating a transmission path control process according to Example 2-3. In Example 1-5, the operation of each RIS is activated by the control information transmitted from the terminal device 40 via the base station 20 and the master RIS. The master RIS may be regarded as a communication device that transmits the combined wave information to each of the slave RISs. Hereinafter, the transmission path control process according to Example 2-3 will be described with reference to FIG. 18.

The acquisition unit 431 of the terminal device 40 acquires the combined wave information. The transmission unit 432 of the terminal device 40 transmits the control information (control signal) relating to the control of the transmission path, to the base station 20 (Step S801). The acquisition unit 231 of the base station 20 acquires the control information from the terminal device 40. The transmission unit 232 of the base station 20 transmits the control information (control signal) relating to the control of the transmission path, to the master RIS (Step S802). The control information includes the combined wave information described above. Similarly to Example 1-3 described above, the terminal device 40 may transmit the control information by using the predetermined physical channel, may transmit the control information by using the individually defined frequency channels for the RISs, may transmit the control information by using the unlicensed band channel, or may transmit the control information by using the frequency channel allocated for signal transmission to another system. The terminal device 40 may change the transmission form of the control information according to a channel to be used.

The acquisition unit 331 of the master RIS acquires the control information from the terminal device 40. The transmission unit 332 of the master RIS transmits the control information (control signal) relating to the control of the transmission path, to one or a plurality of the slave RISs that is caused to perform the operation of the present embodiment (Step S803). The control information includes the combined wave information described above. Similarly to Example 2-2 described above, the terminal device 40 may transmit the control information by using the predetermined physical channel, may transmit the control information by using the individually defined frequency channels for the slave RISs, may transmit the control information by using the unlicensed band channel, or may transmit the control information by using the frequency channel allocated for signal transmission to another system. Similarly to Example 2-2 described above, the master RIS may change the transmission form of the control information according to a channel to be used.

The acquisition unit 331 of each slave RIS acquires the control information from the master RIS. Then, the transmission path control unit 333 of the master RIS and/or the slave RIS performs processing relating to control of the transmission path on the basis of the combined wave information included in the control information. For example, the master RIS and/or the slave RIS performs control relating to the reflection characteristic or the transmission characteristic of the surface portion 35 on the basis of the combined wave information. For example, the master RIS and/or the slave RIS operates the dielectric constant and/or magnetic permeability of one or a plurality of meta-surfaces of the surface portion 35 on the basis of the combined wave information. Note that when the master RIS changes the interference fringes at fixed time intervals, the master RIS and/or the slave RIS may operate so as to periodically form specific interference fringes in a preset specific area.

Note that typically, a control device for each slave RIS is a control unit (e.g., control unit 33) included in the slave RIS. However, the master RIS or the control unit 33 of the master RIS may function as the control device for each slave RIS. In this configuration, the surface portion 35 of each slave RIS may be subjected to centralized control by the master RIS. In this configuration, the control unit 33 of the master RIS may perform control relating to the reflection characteristic or the transmission characteristic of the surface portion 35 of each slave RIS on the basis of the combined wave information acquired in Step S802. For example, the master RIS may operate the dielectric constant and/or magnetic permeability of the one or plurality of meta-surfaces of the surface portion 35 of each slave RIS on the basis of the combined wave information.

Thereafter, the communication control unit 433 of the terminal device 40 transmits the data to the base station 20 (Step S804).

### <4-3. Example 3>

In Example 3, the operation of each RIS is activated on the basis of a timer held by the RIS itself.

For example, the acquisition unit 431 of each RIS acquires the combined wave information from the storage unit 42. The combined wave information may be acquired in advance from a communication device (e.g., management device 10, base station 20, terminal device 40, control station 50, or another transmission path control device 30) and stored in the storage unit 42. Then, at predetermined timing, each RIS operates the dielectric constant and/or magnetic permeability of the one or plurality of meta-surfaces of the surface portion 35 on the basis of the combined wave information. For example, the RIS may operate to periodically form specific interference fringes in a preset specific area.

### <4-4. Example 4>

In Example 4, the operation of each RIS is activated on the basis of a change in an environment where the RISs are arranged.

As described above, RIS may include the sensor unit 54. The sensor unit 54 is a sensor that acquires information about an object around the device (e.g., around the RIS). When the RIS includes the sensor unit 54, the RIS can capture surrounding obstacles or the like on the basis of information from the sensor unit 54.

When the RIS includes the sensor unit 54, the RIS may generate the combined wave information by itself on the basis of the information from the sensor unit 54. The acquisition unit 331 of the RIS may acquire the combined wave information generated on the basis of the information from the sensor unit 54 so that the transmission path control unit 333 of the RIS controls the surface portion 35 on the basis of the combined wave information. For example, the RIS may generate predetermined interference fringes by controlling the surface portion 35 on the basis of the information from the sensor unit 54. For example, the RIS may form thick interference fringes so as to cover the transmission path. In addition, the RIS may form fine interference fringes to provide a radio wave having constant reception power to the terminal device 40 moving at high speed. Note that the RIS may generate the combined wave information in cooperation with another RIS. For example, the RIS may determine the interference fringes to be formed, in cooperation with the another RIS that can acquire information from the sensor unit 54 of itself.

Note that a communication device (base station 20/terminal device 40) may also include a sensor unit (sensor unit 24/sensor unit 44). In this configuration, the communication device may generate the combined wave information on the basis of information from the sensor unit. The acquisition unit 331 of the RIS may acquire the combined wave information generated on the basis of the information from the sensor unit so that the transmission path control unit 333 of the RIS controls the surface portion 35 on the basis of the combined wave information. The communication device including the sensor unit may include the management device 10 and/or the control station 50. The communication device may generate the combined wave information, in cooperation with another device (e.g., at least one of the management device 10, the base station 20, the transmission path control device 30, the terminal device 40, and the control station 50) including a sensor unit.

### <<5. Modifications>>

The embodiments described above are merely examples, and various modifications and applications are possible.

For example, in the above examples (Examples 1 to 4), the RIS is the reflector/reflective sheet that enables control of the reflection characteristic (e.g., reflection direction/reflection ratio), but the RIS may be a transmission plate/transmission sheet that enables control of the transmission characteristic (e.g., refraction direction). Note that the descriptions of the RIS appearing in the above examples can be replaced with the transmission path control device 30.

Furthermore, in the above embodiments, the transmission path control device 30 is a device enabling control of the reflection characteristic and/or transmission characteristic of the structure that reflects or transmits the incoming radio wave. However, the characteristics that can be controlled by the transmission path control device 30 is not limited thereto. For example, the transmission path control device 30 may be configured to be able to control a radiation angle (directivity) of a reflected and/or transmitted radio wave.

In Examples 1, 3, and 4, the plurality of RISs is installed in the communication environment, but one RIS may be installed. In this configuration, the combined waves may be combined waves of a radio wave from a communication device and a reflected/transmitted wave of the RIS. In Example 2, the plurality of slave RISs is installed in the communication environment, but one slave RIS may be installed. This configuration also enables the communication system 1 to increase or decrease the reception power at a specific position.

Furthermore, in the above embodiments, each transmission path control device 30 or the control device that controls the transmission path control device 30 directly or indirectly acquires the combined wave information from a communication device (base station 20 or terminal device 40) that performs communication via the transmission path control device 30, but the combined wave information may be acquired from an information processing device other than the communication device that performs communication via the transmission path control device 30. For example, the transmission path control device 30 or the control device that controls the transmission path control device 30 may acquire the combined wave information from the management device 10, or may acquire the combined wave information from a server device connected via a network.

The control device that controls the transmission path control device 30 may be the management device 10, the base station 20, the terminal device 40, or the control station 50, or may be the control units (e.g., the control unit 13, the control unit 23, the control unit 43, or the control unit 53) of the management device 10, the base station 20, the terminal device 40, or the control station 50. Furthermore, the control device that controls the transmission path control device 30 may be another transmission path control device 30 or a control unit 33 of the another transmission path control device 30. As a matter of course, the control device that controls the transmission path control device 30 may be the control unit 33 of the transmission path control device 30.

A control device that controls the management devices 10, the base stations 20, the transmission path control devices 30, the terminal devices 40, or the control station 50 according to the present embodiment may be implemented by a dedicated computer system or a general-purpose computer system.

For example, programs for executing the operations described above are stored, in a distributable manner, on a computer-readable recording medium such as an optical disk, semiconductor memory, magnetic tape, or flexible disk. Then, the control device is configured, for example, with the programs installed on a computer and performing the processes described above. At this time, the control device may be a device (e.g., a personal computer) outside the management devices 10, the base stations 20, the transmission path control devices 30, the terminal devices 40, or the control station 50. Furthermore, the control device may be a device (e.g., the control unit 13, the control unit 23, the control unit 33, or the control unit 43, or the control unit 53) inside the management device 10, the base station 20, the transmission path control device 30, the terminal device 40, or the control station 50.

Furthermore, each of the communication programs described above may be stored in a disk device included in a server device on a network such as the Internet, for example, in a manner to be downloaded to the computer. Furthermore, the functions described above may be implemented by cooperation between an operating system (OS) and application software. In this configuration, a portion other than the OS may be stored in a medium in a distributable manner, or the portion other than the OS may be stored in the server device, for example, in a manner to be downloaded to the computer.

Furthermore, of the processes described in the above embodiments, all or some of the processes described to be performed automatically may be performed manually, or all or some of processes described to be performed manually may be performed automatically by a known method. In addition, the process procedures, specific names, and information including various data and parameters, which are described in the above description or illustrated in the drawings, can be appropriately changed unless otherwise specified. For example, various information illustrated in the drawings is not limited to the illustrated information.

Furthermore, the component elements of the devices are illustrated as functional concepts but are not necessarily required to be physically configured as illustrated. In other words, specific forms of distribution or integration of the devices are not limited to those illustrated, and all or some of the devices may be configured by being functionally or physically distributed/integrated in appropriate units, according to various loads or usage conditions.

Furthermore, the embodiments having been described above can be appropriately combined within a range consistent with process contents. Furthermore, the orders of the steps illustrated in the sequence diagrams or flowcharts of the present embodiment can be changed appropriately.

Furthermore, for example, the present embodiment can be implemented as all configurations constituting a device or a system, such as a processor as a system large scale integration (LSI) or the like, a module using a plurality of processors or the like, a unit using a plurality of modules or the like, and a set (i.e., partial configuration of a device) obtained by further adding other functions to the unit.

Note that, in the present embodiment, the system means an aggregation of a plurality of component elements (devices, modules (components), and the like), and it does not matter whether all the component elements are in the same housing. Therefore, a plurality of devices that is housed in separate housings and connected via a network, and one device that includes a plurality of modules housed in one housing are both systems.

Furthermore, for example, the present embodiment can adopt a configuration of cloud computing in which one function is shared between a plurality of devices via a network to perform processing by the plurality of devices in cooperation.

### <<6. Conclusion>>

As described above, according to the present embodiment, the communication system 1 includes a communication device (e.g., base station 20 or terminal device 40) that performs communication in a communication environment in which one or a plurality of transmission path control devices 30 is installed. The communication device acquires the combined wave information about the combined waves formed by radio waves from a plurality of devices, including a radio wave from each transmission path control device 30. Then, the combined wave information is transmitted to the transmission path control device 30 or the control device for the transmission path control device 30. The control device for the transmission path control device 30 may be a device outside the transmission path control device 30 (e.g., the control station 50) or a device inside the transmission path control device 30 (e.g., the control unit 33). The transmission path control device 30 or the control device for the transmission path control device 30 performs control relating to the reflection characteristic or the transmission characteristic of the surface portion 35 of the transmission path control device 30 on the basis of the combined wave information.

This configuration enables the communication system 1 to increase or decrease the reception power at a specific position. In addition, in the present embodiment, sounding operation for acquisition of channel information between the communication device-transmission path control device 30 is made unnecessary. Therefore, the communication system 1 enables reduction of overhead for signaling.

Although the embodiments of the present disclosure have been described above, the technical scope of the present disclosure is not limited to the embodiments described above and various changes and alterations can be made without departing from the spirit and scope of the present disclosure. Moreover, the component elements of different embodiments and modifications may be suitably combined with each other.

Furthermore, the effects in the embodiments described herein are merely examples, the present disclosure is not limited to these effects, and other effects may also be provided.

Note that the present technology may also have the following configurations.
(1) A communication device enabling direct or indirect transmission of information, to a transmission path control device including a structure reflecting or transmitting an incoming radio wave and enabling control relating to a reflection characteristic or a transmission characteristic of the structure, the communication device comprising:
   an acquisition unit that acquires combined wave information about combined waves formed by radio waves from a plurality of devices including a radio wave from the transmission path control device; and
   a transmission unit that transmits the combined wave information to the transmission path control device or a control device for the transmission path control device.
(2) The communication device according to (1), wherein
   the transmission path control device is a reconfigurable intelligent surface (RIS).
(3) The communication device according to (1) or (2), wherein
   the radio waves from the plurality of devices include the radio wave from the transmission path control device and radio waves from one or a plurality of other transmission path control devices.
(4) The communication device according to any one of (1) to (3), wherein
   the radio waves from the plurality of devices include the radio wave from the transmission path control device and radio waves from one or a plurality of base stations.
(5) The communication device according to any one of (1) to (4), wherein
   the radio waves from the plurality of devices include the radio wave from the transmission path control device and radio waves from one or a plurality of terminal devices.
(6) The communication device according to any one of (1) to (4), wherein
   the combined wave information includes interference fringe information about interference fringes formed by the radio waves from the plurality of devices.
(7) The communication device according to any one of (1) to (6), wherein
   the combined wave information includes position information of a base station or a terminal device that performs communication in an environment in which the transmission path control device is installed.
(8) The communication device according to any one of (1) to (7), wherein
   the plurality of devices includes a plurality of transmission path control devices including the transmission path control device, and
   the combined wave information includes information about one or a plurality of other transmission path control devices that cooperates with the transmission path control device to form combined waves.
(9) The communication device according to any one of (1) to (8), wherein
   the structure includes one or a plurality of meta-surfaces, and
   the combined wave information includes information about at least one of a dielectric constant and a magnetic permeability of the one or plurality of meta-surfaces.
(10) The communication device according to any one of (1) to (9), wherein
   the communication device is a base station or a terminal device.
(11) The communication device according to any one of (1) to (10), wherein
   the transmission unit transmits, upon communication with another communication device as a communication partner, combined wave information about combined waves assumed to be formed upon the communication, to the transmission path control device or the control device for the transmission path control device.
(12) The communication device according to any one of (1) to (11), wherein
   the transmission unit transmits the combined wave information via a control station that controls a plurality of transmission path control devices including the transmission path control device.
(13) The communication device according to any one of (1) to (12), wherein
   the transmission unit transmits the combined wave information via one transmission path control device, from among a plurality of transmission path control devices including the transmission path control device.
(14) A control device comprising:
   an acquisition unit that acquires combined wave information about combined waves formed by radio waves from a plurality of devices, including a radio wave from a transmission path control device including a structure reflecting or transmitting an incoming radio wave and enabling control relating to a reflection characteristic or a transmission characteristic of the structure; and
   a control unit that performs control relating to the reflection characteristic or the transmission characteristic of the structure, based on the combined wave information.
(15) The control device according to (14), wherein
   the transmission path control device is a reconfigurable intelligent surface (RIS).
(16) The control device according to (14) or (15), wherein
   the control device is the transmission path control device or a control device included in the transmission path control device.
(17) The control device according to (14) or (15), wherein
   the control device is a base station, a terminal device, or a control station that performs centralized control on a plurality of transmission path control devices.
(18) The control device according to any one of (14) to (17), further comprising
   a sensor unit that acquires information about an object around the transmission path control device,
   wherein the acquisition unit acquires the combined wave information generated based on information from the sensor unit, and
   the control unit performs control relating to the reflection characteristic or the transmission characteristic of the structure, based on the combined wave information generated based on the information from the sensor unit.
(19) A communication method executed by a communication device enabling direct or indirect transmission of information, to a transmission path control device including a structure reflecting or transmitting an incoming radio wave and enabling control relating to a reflection characteristic or a transmission characteristic of the structure, the communication method comprising:
   acquiring combined wave information about combined waves formed by radio waves from a plurality of devices including a radio wave from the transmission path control device; and
   transmitting the combined wave information to the transmission path control device or a control device for the transmission path control device.
(20) A control method comprising:
   acquiring combined wave information about combined waves formed by radio waves from a plurality of devices, including a radio wave from a transmission path control device including a structure reflecting or transmitting an incoming radio wave and enabling control relating to a reflection characteristic or a transmission characteristic of the structure; and
   performing control relating to the reflection characteristic or the transmission characteristic of the structure, based on the combined wave information.

### Reference Signs List

1 COMMUNICATION SYSTEM
10 MANAGEMENT DEVICE
20 BASE STATION
30 TRANSMISSION PATH CONTROL DEVICE
40 TERMINAL DEVICE
50 CONTROL STATION
11, 31, 51 COMMUNICATION UNIT
21, 41 WIRELESS COMMUNICATION UNIT
12, 22, 32, 42, 52 STORAGE UNIT
13, 23, 33, 43, 53 CONTROL UNIT
24, 34, 44, 54 SENSOR UNIT
35 SURFACE PORTION
211, 411 TRANSMISSION PROCESSING UNIT
212, 412 RECEPTION PROCESSING UNIT
213, 413 ANTENNA
231, 331, 431, 531 ACQUISITION UNIT
232, 332, 432, 532 TRANSMISSION UNIT
233, 433, 533 COMMUNICATION CONTROL UNIT
333 TRANSMISSION PATH CONTROL UNIT

## Claims

1. A communication device enabling direct or indirect transmission of information, to a transmission path control device including a structure reflecting or transmitting an incoming radio wave and enabling control relating to a reflection characteristic or a transmission characteristic of the structure, the communication device comprising:
an acquisition unit that acquires combined wave information about combined waves formed by radio waves from a plurality of devices including a radio wave from the transmission path control device; and
a transmission unit that transmits the combined wave information to the transmission path control device or a control device for the transmission path control device.

2. The communication device according to claim 1, wherein
the transmission path control device is a reconfigurable intelligent surface (RIS).

3. The communication device according to claim 1, wherein
the radio waves from the plurality of devices include the radio wave from the transmission path control device and radio waves from one or a plurality of other transmission path control devices.

4. The communication device according to claim 1, wherein
the radio waves from the plurality of devices include the radio wave from the transmission path control device and radio waves from one or a plurality of base stations.

5. The communication device according to claim 1, wherein
the radio waves from the plurality of devices include the radio wave from the transmission path control device and radio waves from one or a plurality of terminal devices.

6. The communication device according to claim 1, wherein
the combined wave information includes interference fringe information about interference fringes formed by the radio waves from the plurality of devices.

7. The communication device according to claim 1, wherein
the combined wave information includes position information of a base station or a terminal device that performs communication in an environment in which the transmission path control device is installed.

8. The communication device according to claim 1, wherein
the plurality of devices includes a plurality of transmission path control devices including the transmission path control device, and
the combined wave information includes information about one or a plurality of other transmission path control devices that cooperates with the transmission path control device to form combined waves.

9. The communication device according to claim 1, wherein
the structure includes one or a plurality of meta-surfaces, and
the combined wave information includes information about at least one of a dielectric constant and a magnetic permeability of the one or plurality of meta-surfaces.

10. The communication device according to claim 1, wherein
the communication device is a base station or a terminal device.

11. The communication device according to claim 1, wherein
the transmission unit transmits, upon communication with another communication device as a communication partner, combined wave information about combined waves assumed to be formed upon the communication, to the transmission path control device or the control device for the transmission path control device.

12. The communication device according to claim 1, wherein
the transmission unit transmits the combined wave information via a control station that controls a plurality of transmission path control devices including the transmission path control device.

13. The communication device according to claim 1, wherein
the transmission unit transmits the combined wave information via one transmission path control device, from among a plurality of transmission path control devices including the transmission path control device.

14. A control device comprising:
an acquisition unit that acquires combined wave information about combined waves formed by radio waves from a plurality of devices, including a radio wave from a transmission path control device including a structure reflecting or transmitting an incoming radio wave and enabling control relating to a reflection characteristic or a transmission characteristic of the structure; and
a control unit that performs control relating to the reflection characteristic or the transmission characteristic of the structure, based on the combined wave information.

15. The control device according to claim 14, wherein
the transmission path control device is a reconfigurable intelligent surface (RIS).

16. The control device according to claim 14, wherein
the control device is the transmission path control device or a control device included in the transmission path control device.

17. The control device according to claim 14, wherein
the control device is a base station, a terminal device, or a control station that performs centralized control on a plurality of transmission path control devices.

18. The control device according to claim 14, further comprising
a sensor unit that acquires information about an object around the transmission path control device,
wherein the acquisition unit acquires the combined wave information generated based on information from the sensor unit, and
the control unit performs control relating to the reflection characteristic or the transmission characteristic of the structure, based on the combined wave information generated based on the information from the sensor unit.

19. A communication method executed by a communication device enabling direct or indirect transmission of information, to a transmission path control device including a structure reflecting or transmitting an incoming radio wave and enabling control relating to a reflection characteristic or a transmission characteristic of the structure, the communication method comprising:
acquiring combined wave information about combined waves formed by radio waves from a plurality of devices including a radio wave from the transmission path control device; and
transmitting the combined wave information to the transmission path control device or a control device for the transmission path control device.

20. A control method comprising:
acquiring combined wave information about combined waves formed by radio waves from a plurality of devices, including a radio wave from a transmission path control device including a structure reflecting or transmitting an incoming radio wave and enabling control relating to a reflection characteristic or a transmission characteristic of the structure; and
performing control relating to the reflection characteristic or the transmission characteristic of the structure, based on the combined wave information.
